(19) Europäisches Patentamt
European Patent Office
Office européen des brevets

(11) EP 2 507 281 B1

(12) **EUROPEAN PATENT SPECIFICATION**

(45) Date of publication and mention of the grant of the patent:
**18.05.2016 Bulletin 2016/20**

(21) Application number: **10798629.1**

(22) Date of filing: **01.12.2010**

(51) Int Cl.:
***C08G 18/38*** (2006.01) ***C08G 18/66*** (2006.01)
***C09D 175/04*** (2006.01)

(86) International application number:
**PCT/JP2010/071953**

(87) International publication number:
**WO 2011/068246 (09.06.2011 Gazette 2011/23)**

(54) **CHIPPING-RESISTANT COATING COMPOSITION**

ZERSPANUNGSRESISTENTE BESCHICHTUNGSZUSAMMENSETZUNG

COMPOSITION DE REVÊTEMENT ANTI-ÉCAILLAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.12.2009 JP 2009273985**

(43) Date of publication of application:
**10.10.2012 Bulletin 2012/41**

(73) Proprietor: **Kansai Paint Co., Ltd**
**Amagasaki-shi, Hyogo 661-8555 (JP)**

(72) Inventors:
- **GOTOU, Kouta**
**Kanagawa 254-8562 (JP)**
- **SAIKA, Masaaki**
**Kanagawa 254-8562 (JP)**
- **TONOMURA, Hironori**
**Kanagawa 254-8562 (JP)**

(74) Representative: **Zimmermann & Partner Patentanwälte mbB**
**Postfach 330 920**
**80069 München (DE)**

(56) References cited:
**WO-A1-2007/010385**
**WO-A1-2009/086253**
**US-A- 4 471 102**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 507 281 B1

**Description**

**Technical Field**

The present invention relates to a chipping-resistant coating composition and a method for forming a coated film using the chipping-resistant coating composition.

**Background Art**

When an automobile is running at a high speed, small stones collide against a coated surface of outside plates of the automobile and a phenomenon of peeling off the coated film at the collision portion, so-called a chipping phenomenon is generated. When the chipping phenomenon is generated, an appearance of the automobile deteriorates and further a steel plate under the coated film is exposed at the portion where the coated film is peeled off, resulting in generation of rust and progress of corrosion. Thus, the chipping phenomenon causes a serious problem. In general, the collision of small stones during the running of an automobile frequently occurs at skirt portions such as tire houses, front edge portions of hoods, a front edge portion of a roof, and the like and the chipping phenomenon tends to be generated at such portions.

Therefore, in the coating of an automobile, portions where such a chipping phenomenon tends to be generated have been coated with a chipping-resistant paint. Particularly, since the front edge portions of hoods and the front edge portion of a roof remarkably influence an appearance of the automotive body as well as the portions are exposed to rainfall and raindrops remain thereon in some cases, the chipping-resistant paint with which the portions are coated is required to be excellent in coated film appearance such as smoothness and coated film performance such as water resistance.

For example, Patent Literature 1 describes that a chipping-resistant coating composition containing whisker-like calcium carbonate having a major axis of 3 to 50 μm, a minor axis of 0.3 to 2.0 μm, and an aspect ratio (major axis/minor axis) of 5 to 50 can form a coated film having an excellent chipping resistance.

Moreover, Patent Literature 2 describes a chipping-resistant paint which contains (A) an organic solvent-soluble urethane polymer which is an adduct of a diisocyanate compound with a polyol having two or three hydroxyl groups on average per one molecule and has a number-average molecular weight of 10,000 to 100,000, (B) a hydroxyl group-containing resin having a number-average molecular weight of 400 to 5000, and (C) a blocked polyisocyanate compound as main components and wherein the component(A) is from 30 to 90% by weight and the component(B) is from 10 to 70% by weight based on the total solid weight of the components(A) and (B), a regenerated isocyanate group of the component (C) is from 0.3 to 1.5 equivalents per 1 equivalent of the total hydroxyl groups in the components (A) and (B), and glass transition temperature of a heat-cured coated film thereof is 10°C or lower. Furthermore, it is described that the chipping-resistant paint is excellent in spray workability and also can form a coated film having excellent smoothness, distinctness of image (DOI), chipping resistance, and moisture resistance.

**Citation List**

WO 2007/010385 discloses coating compositions comprising hydroxy-functional isocyanurates.

Summary of Invention

Technical Problem

However, the coated film formed with the chipping-resistant coating composition described in Patent Document 1 is insufficient in smoothness and water resistance.

Moreover, the coated film formed with the chipping-resistant coating composition described in Patent Document 2 is insufficient in water resistance. Furthermore, in the case where the film thickness of the cured coated film to be formed is relatively small, the chipping resistance and water resistance of the coated film are insufficient in some cases.

Therefore, an object of the present invention is to provide a chipping-resistant coating composition capable of forming a coated film excellent in chipping resistance and water resistance.

Solution to Problem

The present inventors have extensively studied for solving the above problems. As a result, they have found that a coating composition which contains a hydroxyl group-containing urethane resin obtained by reacting a polyol component containing a cyclic polyol compound having a nurate structure with a polyisocyanate compound and a curing

agent can form a coated film excellent in chipping resistance and water resistance.

Namely, the present invention provides the following chipping-resistant coating composition, method of forming coated film using the chipping-resistant coating composition, and article coated with the chipping-resistant coating composition.

1. A chipping-resistant coating composition comprising:

a hydroxyl group-containing urethane resin (A) obtained by reacting a polyol component (a) composed of a cyclic polyol compound (a1) having a nurate structure and another polyol compound (a2) with a polyisocyanate compound (b),
wherein said polyol compound (a2) contains at least one diol compound (a2-1) selected from the group consisting of:

a polyether diol compound (a2-1-1) represented by the following general formula (1)

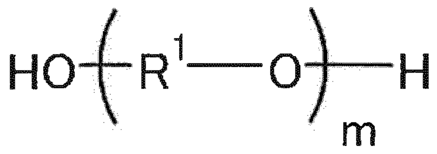

(1)

wherein $R^1$'s each represent an alkylene group having 3 or more carbon atoms, m represents an integer of 2 to 100, and $R^1$'s in m pieces of the repeating unit are the same or different from each other, and

a polycarbonate diol compound (a2-1-2) represented by the following general formula (2):

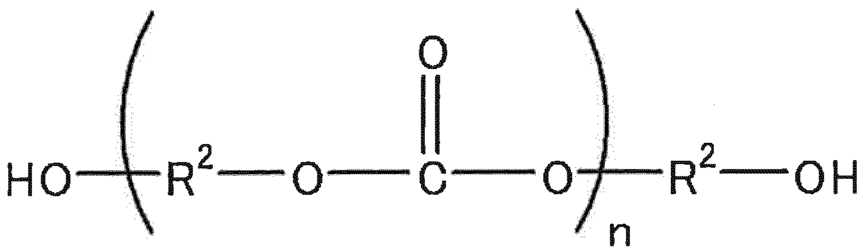

(2)

wherein a plurality of $R^2$'s each independently represent an alkylene group having 3 or more carbon atoms and n represents an integer of 2 to 100,

a curing agent (B), wherein the curing agent (B) is a polyisocyanate and/or a blocked polyisocyanate compound, and
an epoxy resin.

2. The chipping-resistant coating composition according to item 1, wherein the cyclic polyol compound (a1) having a nurate structure is tris(hydroxyalkyl)isocyanurate.

3. The chipping-resistant coating composition according to item 2, wherein the content $C_{a1}$ of the cyclic polyol compound (a1) having a nurate structure based on the total amount of the polyol component (a) is within a range of 1 to 75 mol%, the content $C_{a2-1}$ of the diol compound (a2-1) based on the total amount of the polyol component (a) is within a range of 10 to 99 mol%, and the ratio $C_{a1}/C_{a2-1}$ of $C_{a1}$ to $C_{a2-1}$ is within a range of 1/99 to 75/25.

4. The chipping-resistant coating composition according to any one of items 1 to 3, wherein the polyisocyanate compound (b) is an alicyclic diisocyanate.

5. The chipping-resistant coating composition according to any one of items 1 to 4, wherein the hydroxyl group-containing urethane resin (A) has a hydroxyl value within a range of 1 to 100 mgKOH/g.

6. An article comprising a coated film of the chipping-resistant coating composition according to any one of items 1 to 5.

Advantageous Effects of Invention

The chipping-resistant coating composition of the present invention can form a coated film excellent in chipping resistance and water resistance because the composition contains a hydroxyl group-containing urethane resin obtained by reacting a polyol component containing a cyclic polyol compound having a nurate structure with a polyisocyanate compound and a curing agent.

Description of Embodiments

The following will describe the chipping-resistant coating composition (herein may also referred as "chipping-resistant paint composition") of the invention in detail. The chipping-resistant coating composition of the invention contains a hydroxyl group-containing urethane resin (A) obtained by reacting a polyol component (a) composed of a cyclic polyol compound (a1) having a nurate structure and another polyol compound (a2) with a polyisocyanate compound (b), and a curing agent (B).

[Hydroxyl group-containing urethane resin (A)]

The hydroxyl group-containing urethane resin (A) is obtained by reacting a polyol component (a) composed of a cyclic polyol compound (a1) having a nurate structure and another polyol compound (a2) with a polyisocyanate compound (b).

[Polyol component (a)]

The polyol component (a) is composed of the following cyclic polyol compound (a1) having a nurate structure and other polyol compound (a2).

[Cyclic polyol compound (a1) having nurate structure]

Examples of the cyclic polyol compound (a1) having a nurate structure include tris(hydroxyalkyl)isocyanurates such as tris(hydroxyethyl)isocyanurate, tris(hydroxypropyl)isocyanurate, and tris(hydroxybutyl)isocyanurate; ε-caprolactone-modified products of the tris(hydroxyalkyl)isocyanurates; esterification products of tris(hydroxyethyl)isocyanurate obtained by reacting tris(hydroxyethyl)isocyanurate and a diol compound with a dicarboxylic acid in a state that the hydroxyl groups in tris(hydroxyethyl)isocyanurate and the diol compound are excess to the carboxyl group in the carboxylic acid; and reaction products obtained by reacting a polyisocyanurate compound having a nurate structure with a diol compound in a state that the hydroxyl group in the diol compound is excess to the isocyanate group in the polyisocyanurate compound having a nurate structure. They can be used singly or in combination of two or more thereof.

Of these, from the viewpoints of chipping resistance and water resistance of the resulting coated film, tris(2-hydroxyethyl)isocyanurate and an ε-caprolactone-modified product of tris(2-hydroxyethyl)isocyanurate is preferable and tris(2-hydroxyethyl)isocyanurate is further preferable.

Moreover, from the viewpoints of chipping resistance and water resistance of the resulting coated film, the content $C_{a1}$ of the cyclic polyol compound (a1) having a nurate structure based on the total amount of the polyol component (a) is preferably within the range of 1 to 75 mol%, more preferably within the range of 10 to 65 mol%, further preferably with the range of 20 to 60 mol%, and particularly preferably 40 to 50 mol%.

[Other polyol compound (a2)]

The other polyol compound (a2) is a polyol compound other than the cyclic polyol compound (a1) having a nurate structure.

Examples of the other polyol compound (a2) include polyether polyols, polycarbonate polyols, polyester polyols, polyether ester polyols, polyalkylene polyols, and polyacryl polyols. They can be used singly or in combination of two or more thereof.

Of these, from the viewpoint of water resistance of the resulting coated film, it is preferable to use a polyether polyol and/or a polycarbonate polyol.

Examples of the polyether polyol include polymers or copolymers of alkylene oxides (e.g., ethylene oxide, propylene oxide, and butylene oxide), polymers or copolymers of heterocyclic ethers (e.g., tetrahydrofuran), and copolymers of alkylene oxides and heterocyclic ethers. They can be used singly or in combination of two or more thereof.

Specific examples of the polyether polyol include polyethylene glycol, polypropylene glycol, polyethylene-polypropylene glycol (a block or random copolymer), polyethylene-tetramethylene glycol (a block or random copolymer),

polyoxyalkylene glycols such as polytetramethylene ether glycol and polyhexamethylene ether glycol, and compounds obtained by using a polyhydric alcohol such as glycerin, trimethylolpropane, trimethylolethane, 1,2,6-hexanetriol or 1,2,4-butanetriol as an initiator and adding an alkylene oxide (e.g., ethylene oxide, propylene oxide or butylene oxide) to the initiator. They can be used singly or in combination of two or more thereof.

As the polycarbonate polyol, carbonate derivatives obtained by reacting a carbonate derivative such as diphenyl carbonate, dimethyl carbonate or phosgene with a polyol can be used.

Examples of the polyol include diols such as ethylene glycol, diethyl glycol, triethylene glycol, 1,2-propylene glycol, 1,3-propylene glycol, neopentyl glycol, 1,3-butanediol, 1,4-butanediol, 3-methylpentanediol, 1,5-pentanediol, 1,6-hexanediol, 1,8-octanediol, 2-methyl-1,3-propanediol, 2-methyl-1,5-pentanediol, bisphenol A, hydrogenated bisphenol A, trimethylolpropane, and cyclohexanedimethanol; and triols such as trimethylolmethane, trimethylolethane, trimethylolpropane, trimethylolbutane, glycerin, 1,2,6-hexanetriol, triethanolamine, cyclohexane-1,2,3-trimethanol, cyclohexane-1,2,4-trimethanol, cyclohexane-1,3,5-trimethanol, a reaction product of monoethanolamine with glycidol, and pentaerythritol. They can be used singly or in combination of two or more thereof.

As the polyol, it is preferable to use a diol. From the viewpoint of chipping resistance of the resulting coated film, preferable examples of the diol include 1,5-pentanediol, 1,6-hexanediol, 1,8-octanediol, and 2-methyl-1,5-pentanediol. Of these, 1,6-hexanediol is preferred.

As the polycarbonate polyol, commercially available products can be used. Examples of the commercially available products include "T-5650J" (diol components: 1,6-hexanediol and 1,5-pentanediol), "T-4671" and "T-4672" (diol components in both products: 1,6-hexanediol and 1,4-butanediol) manufactured by Asahi Kasei Chemicals Corporation, and "UM-CARB90" (diol components: 1,6-hexanediol and 1,4-cyclohexanediol), and "UH-CARB200" (diol component: 1,6-hexanediol) manufactured by Ube Industries, Ltd.

Of these, from the viewpoint of water resistance of the resulting coated film, the other polyol compound (a2) preferably contains at least one diol compound (a2-1) of a polyether diol compound (a2-1-1) represented by the following general formula (1) and a polycarbonate diol compound (a2-1-2) represented by the following general formula (2). Of these, from the viewpoint of chipping resistance of the coated film formed, the polycarbonate diol compound (a2-1-2) is more preferred.

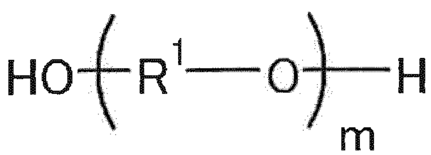

(1)

In the formula (1), $R^1$'s each represent an alkylene group having 3 or more carbon atoms. The number of the carbon atoms of $R^1$ is 3 or more, preferably from 3 to 6, and more preferably from 4 to 5. Furthermore, m represents an integer of 2 to 100, preferably 4 to 80, and more preferably 8 to 40. $R^1$'s in m pieces of the repeating unit may be the same or different from each other.

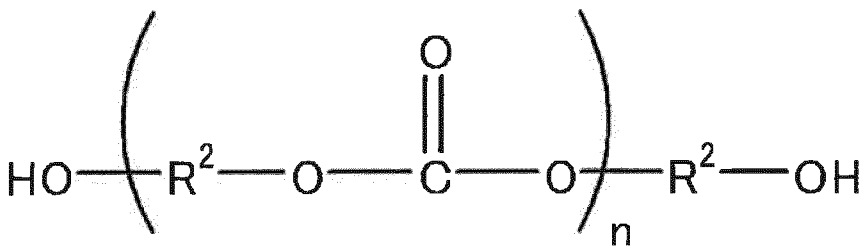

(2)

In the formula (2), a plurality of $R^2$'s each independently represents an alkylene group having 3 or more carbon atoms. The number of the carbon atoms of $R^2$ is 3 or more, preferably from 3 to 22, more preferably from 4 to 9, and further preferably from 6 to 9. Furthermore, n represents an integer of 2 to 100, preferably 4 to 80, and more preferably 8 to 40.

Examples of the polyether diol compound (a2-1-1) include polyoxypropylene glycol, polytetramethylene ether glycol, polypentamethylene ether glycol, and polyhexamethylene ether glycol. They can be used singly or in combination of two or more thereof. Of these, polytetramethylene ether glycol is preferable.

As the polyether diol compound (a2-1-1), it is possible to use a commercially available product. Examples of the commercially available product include "NEWPOL PP-1000" and "NEWPOL PP-2000" manufactured by Sanyo Chemical Industries, Ltd., "PTMG650", "PTMG1000", "PTMG1500", "PTMG2000", and "PTMG3000" manufactured by Mitsubishi Chemical Corporation, and "POLYTHF1000S" manufactured by BASF-Japan.

Moreover, from the viewpoint of chipping resistance and water resistance of the resulting coated film, the content Ca2-1-1 of the polyether diol compound (a2-1-1) based on the total amount of the polyol component (a) is preferably within the range of 10 to 99 mol%, more preferably within the range of 20 to 90 mol%, further preferably within the range of 30 to 80 mol%, and particularly preferably within the range of 40 to 70 mol%.

Furthermore, from the viewpoint of chipping resistance and water resistance of the resulting coated film, the ratio $C_{a1}/Ca_{2-1-1}$ of the content $C_{a1}$ of the cyclic polyol compound (a1) having a nurate structure based on the total amount of the polyol component (a) to the content $C_{a2-1-1}$ of the polyether diol compound (a2-1-1) based on the total amount of the polyol component (a) is preferably within the range of 1/99 to 75/25, more preferably within the range of 10/90 to 70/30, further preferably within the range of 15/85 to 60/40, and particularly preferably within the range of 30/70 to 45/55.

From the viewpoint of water resistance of the resulting coated film, the hydroxyl value of the polyether diol compound (a2-1-1) is preferably within the range of 10 to 180 mgKOH/g, more preferably within the range of 30 to 150 mgKOH/g, and further preferably within the range of 50 to 120 mgKOH/g.

Moreover, from the viewpoint of chipping resistance, smoothness, and water resistance of the resulting coated film, the number-average molecular weight of the polyether diol compound (a2-1-1) is preferably within the range of 400 to 10,000, more preferably within the range of 500 to 5,000, furthermore preferably within the range of 700 to 2,500, and still furthermore preferably within the range of 800 to 1,500.

In this regard, in the present specification, the number-average molecular weight and weight-average molecular weight are values determined by converting retention time (retention volume) measured using a gel permeation chromatograph (GPC) into molecular weight of polystyrene in terms of retention times (retention volumes) of standard polystyrenes whose molecular weights are known, which are measured under identical conditions.

Specifically, the measurement can be performed using "HLC8120GPC" (a trade name, manufactured by Tosoh Corporation) as the gel permeation chromatograph, four columns of "TSK gel G-4000HXL", "TSK gel G-3000HXL", "TSK gel G-2500HXL", and "TSK gel G-2000HXL" (trade names, all manufactured by Tosoh Corporation) as columns, and a differential refractometer as a detector under conditions of a mobile phase of dimethyl sulfoxide, a measuring temperature of 40°C, and a flow rate of 1 mL/minute.

As the polycarbonate diol compound (a2-1-2), for example, there can be used a polycarbonate diol obtained by reacting a carbonate derivative such as diphenyl carbonate, dimethyl carbonate, or phosgene with a diol having an alkylene group having 3 or more carbon atoms.

Examples of the diol having an alkylene group having 3 or more carbon atoms include 1,2-propanediol, 1,3-propanediol, 1,4-butanediol, 3-methylpentanediol, 1,5-pentanediol, 1,6-hexanediol, 1,8-octanediol, 2-methyl-1,3-propanediol, 2,2-dimethyl-1,3-propanediol, and 2-methyl-1,5-pentanediol. They can be used singly or in combination of two or more thereof

Of these, from the viewpoint of chipping resistance of the resulting coated film, 1,5-pentanediol, 1,6-hexanediol, 1,8-octanediol, and 2-methyl-1,5-pentanediol are preferred and 1,6-hexanediol is more preferred.

As the polycarbonate diol compound (a2-1-2), commercially available products can be used. Examples of the commercially available products include "T-5650J", "T-4671" and "T-4672" manufactured by Asahi Kasei Chemicals Corporation and "UH-CARB50", "UH-CARB100", "UH-CARB200", and "UH-CARB300" manufactured by Ube Industries, Ltd.

Moreover, from the viewpoint of chipping resistance and water resistance of the resulting coated film, the content $C_{a2-1-2}$ of the polycarbonate diol compound (a2-1-2) based on the total amount of the polyol component (a) is preferably within the range of 10 to 99 mol%, more preferably within the range of 20 to 90 mol%, further preferably within the range of 30 to 80 mol%, and particularly preferably within the range of 40 to 70 mol%.

Furthermore, from the viewpoint of chipping resistance and water resistance of the resulting coated film, the ratio $C_{a1}/C_{a2-1-2}$ of the content $C_{a1}$ of the cyclic polyol compound (a1) having a nurate structure based on the total amount of the polyol component (a) to the content $C_{a2-1-2}$ of the polycarbonate diol compound (a2-1-2) based on the total amount of the polyol component (a) is preferably within the range of 1/99 to 75/25, more preferably within the range of 10/90 to 70/30, further preferably within the range of 15/85 to 60/40, and particularly preferably within the range of 30/70 to 45/55.

From the viewpoint of water resistance of the resulting coated film, the hydroxyl value of the polycarbonate diol compound (a2-1-2) is preferably within the range of 10 to 240 mgKOH/g, more preferably within the range of 30 to 150 mgKOH/g, and further preferably within the range of 50 to 120 mgKOH/g.

Moreover, from the viewpoint of chipping resistance, smoothness, and water resistance of the resulting coated film, the number-average molecular weight of the polycarbonate diol compound (a2-1-2) is preferably within the range of 400 to 10,000, more preferably within the range of 500 to 5,000, further preferably within the range of 800 to 3,500, and particularly preferably within the range of 1,500 to 2,500.

Furthermore, in the case where the polyether diol compound (a2-1-1) and the polycarbonate diol compound (a2-1-2) are used in combination as the diol compound (a2-1), from the viewpoint of chipping resistance and water resistance of the resulting coated film, the content $C_{a2-1}$ of the diol compound (a2-1) based on the total amount of the

polyol component (a) is preferably within the range of 10 to 99 mol%, more preferably within the range of 20 to 90 mol%, further preferably within the range of 30 to 80 mol%, and particularly preferably within the range of 40 to 70 mol%.

Furthermore, from the viewpoint of chipping resistance and water resistance of the resulting coated film, the ratio $C_{a1}/C_{a2-1}$ of the content $C_{a1}$ of the cyclic polyol compound (a1) having a nurate structure based on the total amount of the polyol component (a) to the content $C_{a2-1}$ of the diol compound (a2-1) based on the total amount of the polyol component (a) is preferably within the range of 1/99 to 75/25, more preferably within the range of 10/90 to 70/30, further preferably within the range of 15/85 to 60/40, and particularly preferably within the range of 30/70 to 45/55.

[Polyisocyanate compound (b)]

The polyisocyanate compound (b) is a compound having at least two isocyanate groups in one molecule. Examples of the polyisocyanate compound (b) include aliphatic polyisocyanates, alicyclic polyisocyanates, aroaliphatic polyisocyanates, and aromatic polyisocyanates as well as derivatives of these polyisocyanates. They can be used singly or in combination of two or more thereof.

Examples of the aliphatic polyisocyanates include aliphatic diisocyanates such as trimethylene diisocyanate, tetramethylene diisocyanate, hexamethylene diisocyanate, pentamethylene diisocyanate, 1,2-propylene diisocyanate, 1,2-butylene diisocyanate, 2,3-butylene diisocyanate, 1,3-butylene diisocyanate, 2,4,4- or 2,2,4-trimethylhexamethylene diisocyanate, dimeric acid diisocyanate, and methyl 2,6-diisocyanatohexanoate (common name: lysine diisocyanate) as well as aliphatic triisocyanates such as 2-isocyanatoethyl 2,6-diisocyanatohexanoate, 1,6-diisocyanato-3-isocyanatomethylhexane, 1,4,8-triisocyanatooctane, 1,6,11-triisocyanatoundecane, 1,8-diisocyanato-4-isocyanatomethyloctane, 1,3,6-triisocyanatohexane, and 2,5,7-trimethyl-1,8-diisocyanato-5-isocyanatomethyloctane.

Examples of the alicyclic polyisocyanates include alicyclic diisocyanates such as 1,3-cyclopentene diisocyanate, 1,4-cyclohexene diisocyanate, 1,3-cyclohexene diisocyanate, 3-isocyanatomethyl-3,5,5-trimethylcyclohexyl isocyanate (common name: isophorone diisocyanate), methyl-2,4-cyclohexene diisocyanate, methyl-2,6-cyclohexene diisocyanate, 1,3- or 1,4-bis(isocyanatomethyl)cyclohexane (common name: hydrogenated xylylene diisocyanate) or mixtures thereof, methylenebis(1,4-cyclohexanediyl) diisocyanate (common name: hydrogenated MDI), and norbornane diisocyanate as well as alicyclic triisocyanates such as 1,3,5-triisocyanatocyclohexane, 1,3,5-trimethylisocyanatocyclohexane, 2-(3-isocyanatopropyl)-2,5-di(isocyanatomethyl)-bicyclo(2.2.1)heptane, 2-(3-isocyanatopropyl)-2,6-di(isocyanatomethyl)-bicyclo(2.2.1)heptane, 3-(3-isocyanatopropyl)-2,5-di(isocyanatomethyl)-bicyclo(2.2.1)heptane, 5-(2-isocyanatoethyl)-2-isocyanatomethyl-3-(3-isocyanatopropyl)-bicyclo(2.2.1)heptane, 6-(2-isocyanatoethyl)-2-isocyanatomethyl-3-(3-isocyanatopropyl)-bicyclo(2.2.1)heptane, 5-(2-isocyanatoethyl)-2-isocyanatomethyl-2-(3-isocyanatopropyl)-bicyclo(2.2.1)heptane, and 6-(2-isocyanatoethyl)-2-isocyanatomethyl-2-(3-isocyanatopropyl)-bicyclo(2.2.1)heptane.

Examples of the aroaliphatic polyisocyanates include aroaliphatic diisocyanates such as methylenebis(1,4-phenylene) diisocyanate (common name: MDI), 1,3- or 1,4-xylylene diisocyanate or mixtures thereof, ω,ω'-diisocyanato-1,4-diethylbenzene, and 1,3- or 1,4-bis(1-isocyanato-1-methylethyl)benzene (common name: tetramethylxylylene diisocyanate) or mixtures thereof as well as aroaliphatic triisocyanates such as 1,3,5-triisocyanatomethylbenzene.

Examples of the aromatic polyisocyanates include aromatic diisocyanates such as m-phenylene diisocyanate, p-phenylene diisocyanate, 4,4'-diphenylene diisocyanate, 1,5-naphthalene diisocyanate, 2,4- or 2,6-tolylene diisocyanate or mixtures thereof, 4,4'-toluidine diisocyanate, and 4,4'-diphenyl ether diisocyanate as well as aromatic triisocyanates such as triphenylmethane-4,4',4"-triisocyanate, 1,3,5-triisocyanatobenzene, and 2,4,6-triisocyanatotoluene as well as aromatic tetraisocyanates such as 4,4'-diphenylmethane-2,2',5,5'-tetraisocyanate.

Moreover, examples of the derivatives of the polyisocyanates include dimers, trimers, biurets, allophanates, urethodiones, urethoimines, isocyanurates, oxadiazinetriones, polymethylenepolyphenyl polyisocyanates (crude MDI, polymeric MDI), and crude TDI of the polyisocyanate compounds.

As the polyisocyanate compound (b), from the viewpoint of chipping resistance, water resistance, smoothness, and distinctness of image of the resulting coated film, alicyclic diisocyanates and derivatives of the alicyclic diisocyanates are preferable and aliphatic diisocyanates are more preferred.

[Process for producing hydroxyl group-containing urethane resin (A)]

The hydroxyl group-containing urethane resin (A) is obtained by reacting the polyol component (a) composed of the cyclic polyol compound (a1) having a nurate structure and the other polyol compound (a2) with the polyisocyanate compound (b).

Specifically, for example, the resin can be obtained by reacting the polyol component (a) with the polyisocyanate compound (b) such that the hydroxyl group in the polyol component (a) is excess to the isocyanate group in the polyisocyanate compound (b).

From the viewpoint of chipping resistance, smoothness, and water resistance of the resulting coated film, the blend ratio of the polyol component (a) to the polyisocyanate compound (b) is adjusted so that the ratio OH/NCO of the

mol number of the hydroxyl group in the polyol component (a) to the mol number of the isocyanate group in the polyisocyanate compound (b) is preferably within the range of 51/49 to 80/20, more preferably 53/47 to 70/30, and further preferably within the range of 55/45 to 65/35.

The reaction of the polyol component (a) with the polyisocyanate compound (b) can be carried out by a hitherto known method. Specifically, for example, the reaction can be performed by reacting the polyol component (a) with the polyisocyanate compound (b) at a temperature within the range of preferably 10 to 170°C and more preferably 20 to 150°C for the period within from 1 to 24 hours and more preferably 2 to 8 hours using an organic solvent inactive to the hydroxyl group and the isocyanate group as a solvent.

Examples of the reaction solvent include acetone, methyl ethyl ketone, methyl isobutyl ketone, tetrahydrofuran, dioxane, N-methylpyrrolidone, toluene, and xylene. They can be used singly or in combination of two or more thereof.

Moreover, in the above reaction, if necessary, a catalyst, a reaction terminator, a chain extender, and the like can be used.

Examples of the catalyst include salts of metals with organic and inorganic acids, such as dibutyltin laurate, dioctyltin laurate, lead octylate, and tetra-n-butyl titanate, organometallic derivatives, organic amines such as triethylamine, and diazabicycloundecene-based catalysts. They can be used singly or in combination of two or more thereof.

As the reaction terminator, for example, monofunctional compounds such as monoalcohols and monoamines and compounds having two functional groups each having a different reactivity to an isocyanate can be used.

Specifically, examples of the reaction terminator include monoalcohols such as methyl alcohol, ethyl alcohol, n-propyl alcohol, isopropyl alcohol, n-butyl alcohol, isobutyl alcohol, and tert-butyl alcohol, monoamines such as monoethylamine, n-propylamine, diethylamine, di-n-propylamine, and di-n-butylamine, and alkanolamines such as monoethanolamine and diethanolamine. They can be used singly or in combination of two or more thereof.

Particularly, alkanolamines are preferred in view of easy controlling ability of the reaction. Moreover, the reaction terminator can be used for adjusting the number-average molecular weight of the hydroxyl group-containing urethane resin (A).

As the chain extender, for example, water and polyamines can be used.

Examples of the polyamines include aliphatic polyamines such as ethylenediamine, N-hydroxyethylethylenediamine, tetramethylenediamine, hexamethylenediamine, and diethylenetriamine; alicyclic polyamines such as 4,4'-diaminodicyclohexylmethane, 1,4-diaminocyclohexane, and isophoronediamine; aromatic ring-containing aliphatic polyamines such as xylylenediamine and tetramethylxylylenediamine; aromatic polyamines such as 4,4'-diaminodiphenylmethane, tolylenediamine, and phenylenediamine as well as hydrazines such as hydrazine, carbodihydrazide, adipodihydrazide, sebacodihydrazide, and phthalodihydrazide. They can be used singly or in combination of two or more thereof.

From the viewpoint of chipping resistance, smoothness, and water resistance of the resulting coated film, the hydroxyl value of the hydroxyl group-containing urethane resin (A) is preferably within the range of 1 to 100 mgKOH/g, more preferably within the range of 10 to 80 mgKOH/g, and further preferably within the range of 20 to 50 mgKOH/g.

Moreover, from the viewpoint of chipping resistance, smoothness, and water resistance of the resulting coated film, the weight-average molecular weight of the hydroxyl group-containing urethane resin (A) is preferably within the range of 5,000 to 100,000, more preferably within the range of 20,000 to 70,000, and further preferably within the range of 30,000 to 50,000.

Furthermore, from the viewpoint of chipping resistance, smoothness, and water resistance of the resulting coated film, the number-average molecular weight of the hydroxyl group-containing urethane resin (A) is preferably within the range of 2,000 to 20,000, more preferably within the range of 4,000 to 16,000, further preferably 5,000 to 12,000, and particularly preferably within the range of 6,000 to 9,900.

Curing agent (B)

The curing agent (B) is a compound capable of curing the coating composition of the invention through the reaction with a functional group in the hydroxyl group-containing urethane resin (A). As the functional group in the hydroxyl group-containing urethane resin (A) which reacts with the curing agent (B), a hydroxyl group is preferred.

Examples of the curing agent (B) include polyisocyanate compounds, blocked polyisocyanate compounds, amino resins, epoxy group-containing compounds, carboxyl group-containing compounds, and carbodiimide group-containing compounds. They can be used singly or in combination of two or more thereof.

Particularly, polyisocyanate compounds, blocked polyisocyanate compounds, and amino resins capable of reacting with the hydroxyl group in the hydroxyl group-containing urethane resin (A) are preferred. From the viewpoint of chipping resistance of the resulting coated film, polyisocyanate compounds and/or blocked polyisocyanate compounds are further preferred and, from the viewpoint of storage stability and easiness in coating work of the paint, blocked polyisocyanate compounds are further particularly preferred.

The polyisocyanate compound is a compound having at least two isocyanate groups in one molecule. Specifically, for example, the polyisocyanate compounds described in the explanation of the above polyisocyanate compound (b) can be used. Of these, from the viewpoint of smoothness of the resulting coated film, polyisocyanate compounds having an isocyanurate structure are preferred.

The blocked polyisocyanate compound is a compound obtained by blocking the isocyanate group of the above polyisocyanate compound with a blocking agent. From the viewpoint of smoothness of the resulting coated film, the blocked polyisocyanate compound is preferably a compound obtained by blocking the polyisocyanate compound having an isocyanurate structure with a blocking agent.

Examples of the blocking agent include phenol-based compounds such as phenol, cresol, xylenol, nitrophenol, ethylphenol, hydroxydiphenyl, butylphenol, isopropylphenol, nonylphenol, octylphenol, and methyl hydroxybenzoate; lactam-based compounds such as ε-caprolactam, δ-valerolactam, γ-butyrolactam, and β-propiolactam; aliphatic alcohols such as methanol, ethanol, propyl alcohol, butyl alcohol, amyl alcohol, and lauryl alcohol; ether-based compounds such as ethylene glycol monomethyl ether, ethylene glycol monoethyl ether, ethylene glycol monobutyl ether, diethylene glycol monomethyl ether, diethylene glycol monoethyl ether, propylene glycol monomethyl ether, and methoxymethanol; alcohol-based compounds such as benzyl alcohol, glycolic acid, methyl glycolate, ethyl glycolate, butyl glycolate, lactic acid, methyl lactate, ethyl lactate, butyl lactate, methylolurea, methylolmelamine, diacetone alcohol, 2-hydroxyethyl acrylate, and 2-hydroxyethyl methacrylate; oxime-based compounds such as formamide oxime, acetamide oxime, acetoxime, methyl ethyl ketoxime, diacetyl monoxime, benzophenone oxime, and cyclohexane oxime; active methylene-based compounds such as dimethyl malonate, diethyl malonate, ethyl acetoacetate, methyl acetoacetate, and acetylacetone; mercaptan-based compounds such as butylmercaptan, t-butylmercaptan, hexylmercaptan, t-dodecylmercaptan, 2-mercaptobenzothiazole, thiophenol, methylthiophenol, and ethylthiophenol; acid amide-based compounds such as acetanilide, acetanisidide, acetotoluide, acrylamide, methacrylamide, acetamide, stearamide, and benzamide; imide-based compounds such as succinimide, phthalimide, and maleimide; amine-based compounds such as diphenylamine, phenylnaphthylamine, xylidine, N-phenylxylidine, carbazole, aniline, naphthylamine, butylamine, dibutylamine, and butylphenylamine; imidazole-based compounds such as imidazole and 2-ethylimidazole; urea-based compounds such as urea, thiourea, ethyleneurea, ethylenethiourea, and diphenylurea; carbamate ester-based compounds such as phenyl N-phenylcarbamate; imine-based compounds such as ethyleneimine and propyleneimine; sulfite salt-based compounds such as sodium bisulfite and potassium bisulfite; and azole-based compounds.

Examples of the azole-based compounds include pyrazole or pyrazole derivatives such as pyrazole, 3,5-dimethylpyrazole, 3-methylpyrazole, 4-benzyl-3,5-dimethylpyrazole, 4-nitro-3,5-dimethylpyrazole, 4-bromo-3,5-dimethylpyrazole, and 3-methyl-5-phenylpyrazole; imidazole or imidazole derivatives such as imidazole, benzimidazole, 2-methylimidazole, 2-ethylimidazole, and 2-phenylimidazole; and imidazoline derivatives such as 2-methylimidazoline and 2-phenylimidazoline. They can be used singly or in combination of two or more thereof.

From the viewpoint of improvement of chipping resistance and smoothness of the resulting coated film, the blocking agent is preferably an oxime-based blocking agent, an active methylene-based blocking agent, and pyrazole or a pyrazole derivative, and particularly preferably an active methylene-based blocking agent.

Moreover, as the blocking agent, there may be also mentioned hydroxycarboxylic acids each having one or more hydroxyl groups and one or more carboxyl groups, such as hydroxypivalic acid and dimethylolpropionic acid.

As a reason why the chipping-resistant coating composition of the invention can form a coated film excellent in chipping resistance in the case where the composition uses the polyisocyanate compound and/or blocked polyisocyanate compound as the curing agent (B), the following reason is surmised.

Since the nurate structure in the cyclic polyol compound (a1) having the nurate structure has a high affinity to the polyisocyanate compound and the blocked polyisocyanate compound, the hydroxyl group-containing urethane resin (A) produced using the polyol component (a) containing the cyclic polyol compound (a1) having the nurate structure is highly compatible with the curing agent (B) composed of the polyisocyanate compound and/or the blocked polyisocyanate compound, and the urethane bond formed by reacting the hydroxyl group-containing urethane resin (A) with the curing agent (B) is present relatively homogeneously in the cured coated film, so that it is surmised that softness is imparted to the whole cured coated film and a coated film excellent in chipping resistance is formed.

Moreover, as the amino resin, for example, there may be mentioned partially methylolated amino resins or completely methylolated amino resins obtained by reacting an amino component with an aldehyde component.

Examples of the amino component include melamine, urea, benzoguanamine, acetoguanamine, steroguanamine, spiroguanamine, and dicyandiamide.

Examples of the aldehyde component include formaldehyde, paraformaldehyde, acetaldehyde, and benzaldehyde.

Moreover, there can be also used those obtained by partially or completely etherifying the partially methylolated amino resins or completely methylolated amino resins with an appropriate alcohol.

Examples of the alcohol for use in the etherification include methyl alcohol, ethyl alcohol, n-propyl alcohol, i-propyl alcohol, n-butyl alcohol, i-butyl alcohol, 2-ethylbutanol, and 2-ethylhexanol.

As the amino resins, melamine resins are preferred. Particularly, methyl-etherified melamine resins obtained

by partially or completely etherifying the methylol group of the partially or completely methylolated melamine resins with methyl alcohol, butyl-etherified melamine resins obtained by partially or completely etherifying the methylol group of the partially or completely methylolated melamine resins with butyl alcohol, and methyl-butyl mixture-etherified melamine resins obtained by partially or completely etherifying the methylol group of the partially or completely methylolated melamine resins with methyl alcohol and butyl alcohol are preferred and the methyl-butyl mixture-etherified melamine resins are more preferred.

Moreover, the melamine resin has a weight-average molecular weight of preferably 400 to 6,000, more preferably 800 to 5,000, further preferably 1,000 to 4,000, and most preferably 1,200 to 3,000.

As the melamine resins, commercially available products can be used. Examples of trade names of the commercially available products include "CYMEL 202", "CYMEL 203", "CYMEL 238", "CYMEL 251", "CYMEL 303" "CYMEL 323", "CYMEL 324", "CYMEL 325", "CYMEL 327", "CYMEL 350", "CYMEL 385", "CYMEL 1156", "CYMEL 1158", "CYMEL 1116", "CYMEL 1130" (all manufactured by Japan Cytec Industries, Inc.), "U-VAN 120", "U-VAN 20HS", "U-VAN 20SE60", "U-VAN 2021", "U-VAN 2028", and "U-VAN 28-60" (all manufactured by Mitsui Chemicals, Inc.).

Moreover, in the case where a melamine resin is used as the curing agent (B), for example, there can be used, as a catalyst, sulfonic acids such as p-toluenesulfonic acid, dodecylbenzenesulfonic acid, and dinonylnaphthalenesulfonic acid; alkyl phosphates such as monobutyl phosphate, dibutyl phosphate, mono-2-ethylhexyl phosphate, and di-2-ethylhexyl phosphate; and salts of these acids and amine compounds.

From the viewpoint of improvement of chipping resistance and water resistance of the coated film, the blend ratio of the hydroxyl group-containing urethane resin (A) to the curing agent (B) in the chipping-resistant coating composition according to the invention is preferably such that the amount of the hydroxyl group-containing urethane resin (A) is from 30 to 95% by mass, more preferably from 40 to 90% by mass, and further preferably from 50 to 80% by mass based on the total amount of both the urethane resin (A) and the curing agent (B). Moreover, the amount of the curing agent (B) is preferably from 5 to 70% by mass, more preferably from 10 to 60% by mass, and further preferably from about 20 to 50% by mass based on the total amount of both the urethane resin (A) and the curing agent (B).

Moreover, the chipping-resistant coating composition of the invention preferably further contains a pigment.

Examples of the pigment include coloring pigments, extender pigments, and effect pigments. The pigments can be used singly or in combination of two or more thereof.

In the case where the chipping-resistant coating composition of the invention contains a pigment, the blend amount of the pigment is preferably within the range of 10 to 120 parts by mass, more preferably 30 to 90 parts by mass, and further preferably within 40 to 75 parts by mass based on 100 parts by mass of the total solid content of the hydroxyl group-containing urethane resin (A) and the curing agent (B).

Examples of the coloring pigments include titanium oxide, zinc oxide, carbon black (including conductive carbon black), molybdenum red, Prussian blue, cobalt blue, azo-based pigments, phthalocyanine-based pigments, quinacridone-based pigments, isoindoline-based pigments, threne-based pigments, perylene-based pigments, dioxazine-based pigments, and diketopyrrolopyrrole-based pigments. They can be used singly or in combination of two or more thereof. Of these, titanium oxide and carbon black are preferred.

In the case where the chipping-resistant coating composition of the invention contains a coloring pigment, the blend amount of the coloring pigment is preferably within the range of 0.01 to 120 parts by mass, more preferably 1 to 90 parts by mass, and further preferably within 10 to 75 parts by mass based on 100 parts by mass of the total solid content of the hydroxyl group-containing urethane resin (A) and the curing agent (B).

Moreover, examples of the extender pigments include clay, kaoline, barium sulfate, barium carbonate, calcium carbonate, talc, silica, and alumina white. They can be used singly or in combination of two or more thereof. Of these, from the viewpoint of chipping resistance of the resulting coated film, barium sulfate and talc are preferred and talc is more preferred.

In the case where the chipping-resistant coating composition of the invention contains an extender pigment, the blend amount of the extender pigment is preferably within the range of 0.1 to 50 parts by mass, more preferably 1 to 30 parts by mass, and further preferably within 5 to 20 parts by mass based on 100 parts by mass of the total solid content of the hydroxyl group-containing urethane resin (A) and the curing agent (B).

Specifically, examples of the effect pigments include non-leafing type or leafing type aluminum (including deposited aluminum), copper, zinc, brass, nickel, glass flakes, aluminum oxide, mica, aluminum oxide covered with titanium oxide or iron oxide, and mica covered with titanium oxide or iron oxide. Of these, aluminum is preferred.

The effect pigment is preferably scale-like one. Moreover, the size in the longitudinal direction is preferably within the range of 1 to 100 $\mu$m and more preferably within the range of 5 to 40 $\mu$m. The thickness of the effect pigment is preferably within the range of 0.001 to 5 $\mu$m and more preferably within the range of 0.01 to 2 $\mu$m.

In the case where the chipping-resistant coating composition of the invention contains an effect pigment, the blend amount of the effect pigment is preferably within the range of 1 to 40 parts by mass, more preferably 3 to 20 parts by mass, and further preferably within 5 to 15 parts by mass based on 100 parts by mass of the total solid content of the hydroxyl group-containing urethane resin (A) and the curing agent (B).

The chipping-resistant coating composition of the invention can further be incorporated with a curing catalyst, a resin other than the hydroxyl group-containing urethane resin (A), hollow particles, elastomer particles, and other additives for paints according to needs.

Examples of the curing catalyst include organometallic compounds such as tin octylate, dibutyltin diacetate, dibutyltin di(2-ethylhexanoate), dibutyltin dilaurate, dioctyltin diacetate, dioctyltin di(2-ethylhexanoate), dibutyltin oxide, dioctyltin oxide, dibutyltin fatty acid salts, lead 2-ethylhexanoate, zinc octylate, zinc naphthenate, zinc fatty acid salts, cobalt naphthenate, calcium octylate, copper naphthenate, and tetra(2-ethylhexyl) titanate; tertiary amines; and phosphoric acid compounds. They can be used singly or in combination of two or more thereof.

In the case where the chipping-resistant coating composition of the invention contains a curing catalyst, the blend amount of the curing catalyst is preferably within the range of 0.001 to 5 parts by mass, more preferably 0.003 to 3 parts by mass, and further preferably within 0.005 to 1 part by mass based on 100 parts by mass of the total solid content of the hydroxyl group-containing urethane resin (A) and the curing agent (B).

As the resin other than the hydroxyl group-containing urethane resin (A), for example, there can be used epoxy resins, acrylic resins, polyester resins, and polyolefin resins.

Examples of the epoxy resins include bisphenol A-type epoxy resins, bisphenol F-type epoxy resins, novolak-type epoxy resins, hydrogenated bisphenol A-type epoxy resins as well as aliphatic epoxy resins such as ethylene glycol diglycidyl ether, diethylene glycol diglycidyl ether, polyethylene glycol diglycidyl ether, propylene glycol diglycidyl ether, polypropylene glycol diglycidyl ether, neopentyl glycol diglycidyl ether, 1,6-hexanediol diglycidyl ether, trimethylolpropane polyglycidyl ether, hexahydrophthalic acid diglycidyl ester, glycerin polyglycidyl ether, diglycerin polyglycidyl ether, and polyglycerin polyglycidyl ether. They can be used singly or in combination of two or more thereof.

From the viewpoint of water resistance and chipping resistance of the coated film formed, the chipping-resistant coating composition of the invention preferably contains the epoxy resin.

Examples of the commercially available products of the epoxy resin include bisphenol A-type epoxy resins such as "jER827", "jER828EL", "jER828EL", "jER828XA", "jER834" (all manufactured by Japan Epoxy Resin), "EPICLON840", "EPICLON840-S","EPICLON850", "EPICLON850-S", "EPICLON850-CRP", "EPICLON850-LC" (all manufactured by DIC), "EPOTOHTO YD-127", "EPOTOHTO YD-128" (all manufactured by Tohto Kasei Co., Ltd.), "RIKARESIN BPO-20E" and "RIKARESIN BEO-60E" (all manufactured by New Japan Chemical Co., Ltd.); bisphenol F-type epoxy resins such as "jER806", "jER807" (all manufactured by Japan Epoxy Resin), "EPICLON830", "EPICLON830-S", "EPICLON835" (all manufactured by DIC), and "EPOTOHTO YDF-170" (all manufactured by Tohto Kasei Co., Ltd.); novolak-type epoxy resins such as "jER152" (manufactured by Japan Epoxy Resin); hydrogenated bisphenol A-type epoxy resins such as "jERYX8000", "jERYX8034" (all manufactured by Japan Epoxy Resin), "EPOTOHTO ST-3000" (manufactured by Tohto Kasei Co., Ltd.), "RIKARESIN HBE-100" (manufactured by New Japan Chemical Co., Ltd.), "DENACOL EX-252" (manufactured by Nagase ChemteX Corporation), and "SR-HBA" (manufactured by Sakamoto Yakuhin Kogyo); and aliphatic epoxy resins such as "YED205", "YED216M", "YED216D" (all manufactured by Japan Epoxy Resin), "EPOTOHTO YH-300", "EPOTOHTO YH-301", "EPOTOHTO YH-315", "EPOTOHTO YH-324", "EPOTOHTO YH-325" (all manufactured by Tohto Kasei Co., Ltd.), "DENACOL EX-211", "DENACOL EX-212", "DENACOL EX-212-L", "DENACOL EX-214L", "DENACOL EX-216L", "DENACOL EX-313 ", "DENACOL EX-314", "DENACOL EX-321", "DENACOL EX-321L", "DENACOL EX-411", "DENACOL EX-421 ", "DENACOL EX-512", "DENACOL EX-521 ", "DENACOL EX-611", "DENACOL EX-612", "DENACOL EX-614", "DENACOL EX-614B", "DENACOL EX-622", "DENACOL EX-810", "DENACOL EX-811", "DENACOL EX-850", "DENACOL EX-850L", "DENACOL EX-851", "DENACOL EX-821", "DENACOL EX-830", "DENACOL EX-832", "DENACOL EX-841", "DENACOL EX-861", "DENACOL EX-911", "DENACOL EX-941 ", "DENACOL EX-920", "DENACOL EX-931" (manufactured by Nagase ChemteX Corporation), "SR-NPG", "SR-16H", "SR-16HL", "SR-TMP", "SR-PG", "SR-TPG", "SR-4PG", "SR-2EG", "SR-8EG", "SR-8EGS", "SR-GLG", "SR-DGE", "SR-DGE", "SR-4GL", "SR-4GLS", and "SR-SEP" (all manufactured by Sakamoto Yakuhin Kogyo).

Moreover, from the viewpoint of chipping resistance, water resistance, and smoothness of the coated film formed, the epoxy resin has an epoxy equivalent preferably within the range of 110 to 500, more preferably within the range of 130 to 350, and further preferably within the range of 150 to 250.

Furthermore, from the viewpoint of chipping resistance, water resistance, and smoothness of the coated film formed, the epoxy resin preferably has a number-average molecular weight preferably within the range of 170 to 2,800, more preferably within the range of 200 to 800, and further preferably within the range of 300 to 500. Also, from the viewpoint of chipping resistance and water resistance of the coated film formed, the epoxy resin preferably has a hydroxyl group.

In the case where the chipping-resistant coating composition of the invention contains the epoxy resin, the blend amount of the epoxy resin is preferably within the range of 0.1 to 50 parts by mass, more preferably 1 to 30 parts by mass, and further preferably within 2 to 20 parts by mass based on 100 parts by mass of the total solid content of the hydroxyl group-containing urethane resin (A) and the curing agent (B).

Examples of the acrylic resin include acrylic resins obtained by copolymerizing carboxyl group-containing polymerizable unsaturated monomers such as (meth)acrylic acid, hydroxyl group-containing polymerizable unsaturated monomers such as 2-hydroxyethyl (meth)acrylate, and other polymerizable unsaturated monomers in the presence of a radical polymerization initiator.

The weight-average molecular weight of the acrylic resin is preferably within the range of 1,000 to 1,000,000 and more preferably within the range of 1,500 to 100,000. Moreover, the acid value thereof is preferably within the range of 5 to 150 mgKOH/g and more preferably within the range of 10 to 75 mgKOH/g. Furthermore, the hydroxyl value thereof is preferably within the range of 10 to 160 mgKOH/g and more preferably within the range of 30 to 120 mgKOH/g.

In the case where the chipping-resistant coating composition of the invention contains the acrylic resin, the blend amount of the acrylic resin is preferably within the range of 0.1 to 50 parts by mass, more preferably 1 to 30 parts by mass, and further preferably within 2 to 20 parts by mass based on 100 parts by mass of the total solid content of the hydroxyl group-containing urethane resin (A) and the curing agent (B).

Examples of the polyester resin include polyester resins obtained by the condensation reaction of polyhydric alcohols such as ethylene glycol, propylene glycol, butylene glycol, 1,6-hexanediol, trimethylolpropane, and pentaerythritol with polybasic carboxylic acid components such as adipic acid, isophthalic acid, terephthalic acid, phthalic anhydride, hexahydrophthalic anhydride, and trimellitic anhydride.

The weight-average molecular weight of the polyester resin is preferably within the range of 1,000 to 100,000 and more preferably within the range of 1,500 to 70,000. Moreover, the acid value thereof is preferably within the range of 1 to 100 mgKOH/g and more preferably within the range of 5 to 50 mgKOH/g. Furthermore, the hydroxyl value thereof is preferably within the range of 10 to 160 mgKOH/g and more preferably within the range of 30 to 120 mgKOH/g.

In the case where the chipping-resistant coating composition of the invention contains the polyester resin, the blend amount of the acrylic resin is preferably within the range of 0.1 to 50 parts by mass, more preferably 1 to 30 parts by mass, and further preferably within 2 to 20 parts by mass based on 100 parts by mass of the total solid content of the hydroxyl group-containing urethane resin (A) and the curing agent (B).

Examples of the polyolefin resin include radical homopolymers or copolymers of at least one olefin selected from ethylene, propylene, butene, methylbutene, and isoprene and radical copolymers of the olefins with polymerizable unsaturated monomers such as vinyl acetate, butadiene, an acrylic acid ester, and a methacrylic acid ester.

In the case where the chipping-resistant coating composition of the invention contains the polyolefin resin, the blend amount of the polyolefin resin is preferably within the range of 0.1 to 50 parts by mass, more preferably 1 to 30 parts by mass, and further preferably within 2 to 20 parts by mass based on 100 parts by mass of the total solid content of the hydroxyl group-containing urethane resin (A) and the curing agent (B).

As the additives for paints, for example, there can be used an ultraviolet absorbent, a light stabilizer, a defoaming agent, a thickening agent, an antirust, a surface regulator, and a pigment dispersant.

The chipping-resistant coating composition according to the invention can be prepared by mixing and dispersing the hydroxyl group-containing urethane resin (A) and the curing agent (B) as well as, if necessary, a pigment, a curing catalyst, a resin other than the hydroxyl group-containing urethane resin (A), and the other additives for paints in a solvent by a known method.

As the solvent, any of water and organic solvents can be used. Examples of the organic solvents include xylene, toluene, cyclohexanone, hexane, pentane, isopropanol, 1-butanol, 1-octanol, 2-ethyl-1-hexanol, benzyl alcohol, butyl acetate, acetone, methyl ethyl ketone, and methyl isobutyl ketone. They can be used singly or in combination of two or more thereof.

The solid content of the chipping-resistant coating composition of the invention is usually preferably from 5 to 70% by mass, more preferably from 10 to 60% by mass, and further preferably from 15 to 50% by mass.

As a reason why the chipping-resistant coating composition of the invention can form a coated film excellent in chipping resistance and water resistance, it is surmised that penetration of water into the coated film formed is suppressed by the cyclic structure having a nurate structure in the polyol compound (a1) and hence the coated film excellent in water resistance is formed. Furthermore, in the case where the diol compound (a2-1) having a relatively long alkylene chain is used as the polyol component (a), since softness is imparted to the coated film formed by the diol compound (a2-1), it is surmised that the coated film excellent in chipping resistance in addition to the water resistance is formed.

[Method for forming coated film]

By coating various articles to be coated (herein after may simply referred as "article") with the chipping-resistant coating composition of the invention, a coated film having excellent water resistance and chipping resistance can be formed.

[Article to be coated (article)]

The articles to which the chipping-resistant coating composition of the invention is applied are not particularly limited but examples thereof include outside plate portions of automotive bodies of cars, trucks, autobicycles, and buses, automotive parts, outside plate portions of railway vehicles, road signs, and guardrails. Of these, outside plate portions of automotive bodies and automotive parts are preferred. Particularly, hood portions and roof portions of automotive bodies requiring excellent smoothness and water resistance are preferred.
The materials of these articles are not particularly limited. Examples thereof include metal materials such as iron, aluminum, brass, copper, tin plate, stainless steel, galvanized steel and zinc alloy (e.g., Zn-Al, Zn-Ni, and Zn-Fe) galvanized steel; resins such as polyethylene resins, polypropylene resins, acrylonitrile-butadiene-styrene (ABS) resins, polyamide resins, acrylic resins, vinylidene chloride resins, polycarbonate resins, polyurethane resins, and epoxy resins and various plastic materials such as FRP; and inorganic materials such as cement and concrete. Of these, metal materials and plastic materials are preferred and metal materials are particularly preferred.
The articles may be those obtained by subjecting the metal surface such as the above-mentioned metal materials and automotive bodies formed therefrom to a surface treatment such as a treatment with a phosphate salt, a chromate treatment, and a treatment with a composite oxide, and also may be those obtained by forming a coated film thereon.
As the article on which a coating is formed, there may be mentioned those obtained by subjecting a base material to a surface treatment according to needs and forming an undercoated film, those obtained by forming an intermediate coated film on the undercoated film, and the like. Particularly, suitable are those obtained by subjecting a base material to a surface treatment according to needs and forming an undercoated film by applying an electrodeposition paint thereon. The electrodeposition paint is preferably a cationic electrodeposition paint.

[Coating method]

After a wet coated film (uncured coated film) is formed by coating an article with the chipping-resistant coating composition of the invention, an objective coated film can be formed by curing the wet coated film.
The coating method with the chipping-resistant coating composition of the invention is not particularly limited and examples thereof include air spray coating, airless spray coating, rotating atomization coating, and curtain-coat coating. The wet coated film can be formed by these coating methods. Of these, air spray coating and airless spray coating are preferred. Moreover, at the coating, static electricity may be applied according to needs.
The coated amount of the chipping-resistant coating composition of the invention is usually preferably an amount so that the cured film thickness becomes 0.5 to 20 μm, more preferably an amount so that the cured film thickness becomes 2 to 10 μm, and further preferably an amount so that the cured film thickness becomes 4 to 8 μm.
After the article to be coated is coated with the chipping-resistant coating composition of the invention, curing of the wet coated film can be performed by heating. The heating can be performed using a known heating apparatus. Examples of the heating apparatus include drying furnaces such as a hot air furnace, an electric furnace, and an infrared induction furnace.
The heating temperature is preferably from 60 to 180°C, more preferably from 80 to 170°C, and further preferably from 100 to 160°C. The heating time is not particularly limited but is usually preferably from about 10 to 60 minutes and more preferably from about 20 to 40 minutes.
After the coating with the chipping-resistant coating composition of the invention, pre-heating, air blowing, and the like can be performed under such a heating condition that the coated film is substantially not cured, from the viewpoint of preventing the generation of coated film defects such as popping. Also, an interval of about 1 to 60 minutes may be interposed at room temperature without heating.
The pre-heating temperature is preferably from 40 to 100°C, more preferably from 50 to 90°C, and further preferably from 60 to 80°C. The pre-heating time is preferably from 30 seconds to 15 minutes, more preferably from 1 to 10 minutes, and further preferably from 2 to 5 minutes.
Moreover, the air blowing is usually preferably performed by blowing air at room temperature or air heated to a temperature of about 25°C to 80°C to the coated surface of the article for 30 seconds to 15 minutes.
In general, after the metal base material portions of an automotive body is subjected to a surface treatment according to needs, an undercoat (hereinafter also may referred as "undercoating composition"), an intermediate coat (hereinafter also may referred as "intermediate coating composition"), and a topcoat (hereinafter also may referred as "topcoating composition") are subsequently applied on the metal base material to form a multilayered coated film composed of an undercoated film, an intermediate coated film, and a topcoated film.
The undercoat is generally applied for the purpose of imparting an anticorrosive property to the article. Moreover, the intermediate coat is usually applied for the purpose of imparting smoothness, chipping resistance, and adhesiveness between the coated films to the article.
Moreover, the topcoat is generally applied for the purpose of imparting excellent design properties (e.g., color,

sparkling effect, and gloss) to the article. As a coating method of the topcoat, for example, there may be mentioned a method of applying one kind of the topcoat to form a monolayered topcoated film, a method of applying two kinds of topcoats composed of a colored basecoat (hereinafter also may referred as "basecoating composition") and a clear coat (hereinafter also may referred as "clear coating composition") to form a top coated film having a two-layered structure, and a method of applying three kinds of topcoats composed of a white basecoat, a pearl-colored basecoat, and a clear coat to form a topcoated film having a three-layered structure.

Of these, from the viewpoint of improvement of the design properties of the resulting coated film and reduction of coating man-hour, it is preferred to apply two kinds of topcoats composed of a colored basecoat and a clear coat to form a topcoated film having a two-layered structure.

The chipping-resistant coating composition of the invention can be used as at least one of the undercoat, the intermediate coat, the topcoat, the basecoat, and the clear coat. Moreover, by applying the chipping-resistant coating composition of the invention between the metal base material and the undercoated film, between the undercoated film and the intermediate coated film, between the intermediate coated film and the topcoated film, between the basecoated film and the clear coated film, and the like, a chipping-resistant coated film may be formed between these coated films.

Particularly, from the viewpoint of chipping resistance, water resistance, and smoothness of the resulting coated film, it is preferred to form the chipping resistant coated film between the undercoated film and the intermediate coated film by applying the chipping-resistant coating composition of the invention between the application of the undercoat and the application of the intermediate coat. As a coated film-forming method in this case, for example, Method I including the following steps (1) to (8) is mentioned.

[Method I]

(1) A step of applying an undercoating composition on an article to form an uncured undercoated film;
(2) A step of heat-curing the uncured undercoated film;
(3) A step of applying the chipping-resistant coating composition of the invention on the heat-cured undercoated film to form an uncured chipping-resistant coated film;
(4) A step of applying an intermediate coating composition on the uncured chipping-resistant coated film to form an uncured intermediate coated film;
(5) A step of heat-curing the uncured chipping-resistant coated film and the uncured intermediate coated film simultaneously;
(6) A step of applying a basecoating composition on the cured intermediate coated film to form an uncured basecoated film;
(7) A step of applying a clear coating composition on the uncured basecoated film to form an uncured clear coated film; and
(8) A step of heat-curing the uncured basecoated film and the uncured clear coated film simultaneously.

The undercoat is preferably an electrodeposition paint and is further preferably a cationic electrodeposition paint. Moreover, the above-mentioned uncured coated film includes a coated film in a state of set-to-touch and a coated film in a state of dry-to-touch.

In the case where the chipping-resistant coating composition of the invention is applied by the procedure of the Method I, the thickness of the coated film is usually preferably within the range of 0.5 to 20 μm, more preferably within the range of 2 to 10 μm, and further preferably within the range of 4 to 8 μm as a cured film thickness.

In Method I, the thickness of the coated film of the intermediate coating composition is usually preferably from 10 to 60 μm and more preferably from 20 to 40 μm as a cured film thickness. Moreover, the thickness of the coated film of the basecoating composition is usually preferably from 5 to 40 μm, more preferably from 7 to 30 μm, and further preferably from 10 to 20 μm as a cured film thickness. Furthermore, the thickness of the coated film of the clear coating composition is usually preferably from 10 to 80 μm and more preferably from 15 to 60 μm as a cured film thickness.

Also, the chipping-resistant coating composition of the invention can be suitably used even in the case where a multilayered coated film composed of an intermediate coated film, a basecoated film, and a clear coated film is formed on an article to be coated such as an automotive body by a 3-coat and 1-bake procedure. As a coated film-forming method in this case, Method II including the following steps (1) to (7) may be mentioned.

[Method II]

(1) A step of applying an undercoating composition on an article to be coated to form an uncured undercoated film;
(2) A step of heat-curing the uncured undercoated film;
(3) A step of applying the chipping-resistant coating composition of the invention on the heat-cured undercoated film to form an uncured chipping-resistant coated film;
(4) A step of applying an intermediate coating composition on the uncured chipping-resistant coated film to form an uncured intermediate coated film;
(5) A step of applying a basecoating composition on the uncured intermediate coated film to form an uncured basecoated film;
(6) A step of applying a clear coating composition on the uncured basecoated film to form an uncured clear coated film; and
(7) A step of heat-curing the uncured chipping-resistant coated film, the uncured intermediate coated film, the uncured basecoated film, and the uncured clear coated film simultaneously.

The Method II is a method wherein the curing step of the chipping-resistant coated film and the intermediate coated film after the application of the intermediate coat is omitted in the Method I and, after the application of the clear coating composition, the chipping-resistant coated film, the intermediate coated film, the basecoated film, and the clear coated film are simultaneously heat-cured.

In the case where the chipping-resistant coating composition of the invention is applied by the procedure of the Method II, the thickness of the coated film is usually preferably within the range of 0.5 to 20 μm, more preferably within the range of 2 to 10 μm, and further preferably within the range of 4 to 8 μm as a cured film thickness.

In the Method II, the thickness of the coated film of the intermediate coating composition is usually preferably from 10 to 60 μm and more preferably from 20 to 40 μm as a cured film thickness. Moreover, the thickness of the coated film of the basecoating composition is usually preferably from 5 to 40 μm, more preferably from 7 to 30 μm, and further preferably from 10 to 20 μm as a cured film thickness. Furthermore, the thickness of the coated film of the clear coating composition is usually preferably from 10 to 80 μm and more preferably from 15 to 60 μm as a cured film thickness.

As the intermediate coating composition for use in the Methods I and II, any of known thermosetting intermediate coating compositions can be used. For example, a thermosetting coating composition containing a base resin having a crosslinkable functional group, a crosslinking agent, a coloring pigment, and an extender pigment can be suitably used.

Examples of the crosslinkable functional group possessed by the base resin include a carboxyl group, a hydroxyl group, and an epoxy group.

Examples of the kind of the base resin include acrylic resins, polyester resins, alkyd resins, and urethane resins.

Examples of the crosslinking agent include melamine resins, polyisocyanate compounds, and blocked polyisocyanate compounds.

As the intermediate coating composition, any of organic solvent-type coating compositions, aqueous coating compositions, and powdery coating compositions may be used.

As the basecoating composition for use in the Methods I and II, any of known thermosetting base coating compositions can be used. For example, a thermosetting coating composition containing a base resin having a crosslinkable functional group, a crosslinking agent, a coloring pigment, and an extender pigment can be suitably used.

Examples of the crosslinkable functional group possessed by the base resin include a carboxyl group, a hydroxyl group, and an epoxy group.

Examples of the kind of the base resin include acrylic resins, polyester resins, alkyd resins, and urethane resins.

Examples of the crosslinking agent include melamine resins, polyisocyanate compounds, and blocked polyisocyanate compounds.

As the basecoating composition, any of organic solvent-type coating compositions, aqueous coating compositions, and powdery coating compositions may be used.

As the clear coating composition for use in the Methods I and II, any of thermosetting clear coating compositions for coating automotive bodies can be used. For example, organic solvent-type thermosetting coating compositions, aqueous thermosetting coating compositions, and powdery thermosetting coating compositions each containing a base resin having a crosslinkable functional group and a crosslinking agent may be mentioned.

Examples of the crosslinkable functional group possessed by the base resin include a carboxyl group, a hydroxyl group, an epoxy group, and a silanol group.

Examples of the kind of the base resin include acrylic resins, polyester resins, alkyd resins, urethane resins, epoxy resins and fluorocarbon resins.

Examples of the crosslinking agent include polyisocyanate compounds, blocked polyisocyanate compounds, melamine resins, urea resins, carboxyl group-containing compounds, carboxyl group-containing resins, epoxy group-containing resins, and epoxy group-containing compounds.

Also, the clear paint may be a one-package paint or a multi-package paint such as a two-package urethane resin paint.

Moreover, the clear coating composition may contain, if necessary, a coloring pigment, an effect pigment, a dye, and the like to such a degree that transparency is not inhibited, and further may appropriately contain an extender pigment, an ultraviolet absorbent, a light stabilizer, a defoaming agent, a thickening agent, an antirust, a surface regulator, and the like.
As the combination of the base resin/crosslinking agent of the clear coating composition, the combinations of carboxyl group-containing resin/epoxy group-containing resin, hydroxyl group-containing resin/polyisocyanate compound, hydroxyl group-containing resin/blocked polyisocyanate compound, hydroxyl group-containing resin/melamine resin, and the like are preferred.
In the Methods I and II, the application of the intermediate coating composition, basecoating composition and the clear coating composition can be performed by known methods, for example, methods such as air spray coating, airless spray coating, and rotating atomization coating.

Examples

The following will further specifically describe the present invention with reference to Production Examples, Examples, and Comparative Examples. However, the invention is not limited thereto. In each example, "part(s)" and "%" is determined on the basis of mass unless otherwise stated. Moreover, the thickness of a coated film is based on a cured coated film.

[Production of ε-caprolactone-modified product of tris(2-hydroxyethyl) isocyanurate]

(Production Example 1)

Into a four-neck reaction vessel equipped with a thermometer, a thermostat, a stirring apparatus, a reflux condenser, a nitrogen-inlet tube, and a dropping apparatus were charged 456 parts of "PLACCEL-M" (a trade name, manufactured by Daicel Chemical Industries, Ltd., ε-caprolactone), 261 parts of tris(2-hydroxyethyl) isocyanurate, and 0.03 part of tetrabutyl titanate, and the whole was heated to 160°C with stirring. The reaction was continued at the same temperature for about 4 hours to obtain an ε-caprolactone-modified product of tris(2-hydroxyethyl) isocyanurate.

[Production of hydroxyl group-containing urethane resin (A)]

(Production Example 2)

Into a four-neck reaction vessel equipped with a thermometer, a thermostat, a stirring apparatus, a reflux condenser, a nitrogen-inlet tube, and a dropping apparatus were charged 243 parts of methyl isobutyl ketone, 20 parts of tris(2-hydroxyethyl) isocyanurate (molecular weight: 261), 102 parts of "NEWPOL PP-1000" (a trade name, manufactured by Sanyo Chemical Industries, Ltd., polypropylene glycol, number-average molecular weight: 1,000, hydroxyl value: 112 mgKOH/g), 24 parts of N-methyl-2-pyrrolidone, and 0.016 part of dibutyltin dilaurate, and the whole was heated to 110°C with stirring. Then, while the temperature of the liquid was maintained at 110°C, 40 parts of methylenebis(1,4-hexanediyl) diisocyanate was added and the reaction was continued until the isocyanate value reached 1.0 mgNCO/g or less on the basis of the resin solid content. Then, 111 parts of methyl isobutyl ketone was added thereto to obtain a hydroxyl group-containing urethane resin solution (A-1) having a solid content of 30%. The hydroxyl value of the resulting hydroxyl group-containing urethane resin was 44 mgKOH/g, the weight-average molecualr weight was 20,000, and the number-average molecular weight was 5,000.
Moreover, the content $C_{a1}$ of the cyclic polyol compound (a1) having a nurate structure based on the total amount of the polyol component (a) in the resulting hydroxyl group-containing urethane resin was calculated as follows.
The mol number of the cyclic polyol compound (a1) having a nurate structure

$$= 20/261 \text{ (tris(2-hydroxyethyl) isocyanurate)}$$

$$\cong 0.0766 \text{ [mol]}$$

The mol number of the polyol component (a)

$$= 20/261 \text{ (tris(2-hydroxyethyl) isocyanurate)} + 102/1000 \text{ ("NEWPOL PP-1000")}$$

$$\cong 0.0766 + 0.102$$

$$= 0.1786 \text{ [mol]}$$

The content $C_{a1}$ of the cyclic polyol compound (a1) having a nurate structure based on the total amount of the polyol component (a)

$$= (0.0766/0.1786) \times 100$$

$$\cong 43 \text{ [mol\%]}$$

Also, the content $C_{a2-1}$ of the diol compound (a2-1) based on the total amount of the polyol component (a) in the resulting hydroxyl group-containing urethane resin was calculated as follows.

The total mol number of the diol compound (a2-1)

$$= 102/1000 \text{ ("NEWPOL PP-1000")}$$

$$= 0.102 \text{ [mol]}$$

The content $C_{a2-1}$ of the diol compound (a2-1) based on the total amount of the polyol component (a)

$$= (0.102/0.1786) \times 100$$

$$\cong 57 \text{ [mol\%]}$$

Moreover, the ratio $C_{a1}/C_{a2-1}$ of the above $C_{a1}$ to $C_{a2-1}$ in the resulting hydroxyl group-containing urethane resin was 43/57 based on the above calculated values.

(Production Examples 3 to 29)

Hydroxyl group-containing urethane resin solutions (A-2) to (A-28) each having a solid content of 30% were obtained in the same manner as in Production

Example 1 except that the blend compositions shown in the following Tables 1 to 3 were used.

Tables 1 to 3 show the composition (part(s)) of raw materials, the content $C_{a1}$ of the cyclic polyol compound (a1) having a nurate structure based on the total amount of the polyol component (a), the content $C_{a2-1}$ of the diol compound (a2-1) based on the total amount of the polyol component (a), the ratio $C_{a1}/Ca_{2-1}$ of the above $C_{a1}$ to $C_{a2-1}$, the hydroxyl value, the acid value, the weigh-average molecular weight, and the number average molecular weight of each of the hydroxyl group-containing urethane resin solutions (A-1) to (A-28).

Table 1

| | | | | | Production Example | | | | | | | | | |
|---|---|---|---|---|---|---|---|---|---|---|---|---|---|---|
| | | | | | 2 | 3 | 4 | 5 | 6 | 7 | 8 | 9 | 10 | 11 |
| Hydroxyl group-containing urethane resin solution | | | | | A-1 | A-2 | A-3 | A-4 | A-5 | A-6 | A-7 | A-8 | A-9 | A-10 |
| Methyl isobutyl ketone | | | | | 243 | 190 | 243 | 272 | 246 | 300 | 314 | 187 | 296 | 397 |
| Polyol Component (a) | Cyclic polyol compound (a1) having nurate structure | | | Tris(2-hydroxyethyl) isocyanurate (molecular weight 261) | 20 | 20 | 20 | 13 | 20 | 7 | 3 | 33 | | 20 |
| | | | | ε-Caprolactone-modified product of tris(2-hydroxyethyl) isocyanurate obtained in Production Example 1 (molecular weight 717) | | | | | | | | | 55 | |
| | Other polyol compound (a2) | Diol compound (a2-1) | Polyether diol compound a2-1-1 | "NEWPOL PP-1000" | 102 | | | | | | | | | |
| | | | | "PTMG-650" (Note 1) | | 66 | | | | | | | | |
| | | | | "PTMG-1000" (Note 2) | | | 102 | 128 | 51 | 153 | 166 | 51 | 102 | |
| | | | | "PTMG-2000" (Note 3) | | | | | | | | | | 204 |
| | | | Polycarbonate diol compound (a2-1-2) | "UH-CARB100" (Note 5) | | | | | 51 | | | | | |
| N-methyl-2-pyrrolidone | | | | | 24 | 19 | 24 | 27 | 25 | 30 | 31 | 19 | 30 | 40 |
| Dibutyltin dilaurate | | | | | 0.016 | 0,013 | 0.016 | 0.018 | 0.016 | 0.020 | 0.021 | 0.012 | 0.020 | 0.026 |
| Polyisocyanate compound (b) | Alicyclic diisocyanate | Methylene-bis(1,4-cyclohexanediyl) diisocyanate (molecular weight 262) | | | 40 | 40 | 40 | 40 | 42 | 40 | 40 | 40 | 40 | 40 |
| Methyl isobutyl ketone | | | | | 111 | 86 | 111 | 124 | 112 | 137 | 143 | 85 | 135 | 181 |

(continued)

| | Production Example | | | | | | | | | |
|---|---|---|---|---|---|---|---|---|---|---|
| | 2 | 3 | 4 | 5 | 6 | 7 | 8 | 9 | 10 | 11 |
| Content $C_{a1}$ of cyclic polyol compound (a1) having nurate structure based on total amount of polyol component (a) [mol%] | 43 | 43 | 43 | 29 | 43 | 14 | 7 | 71 | 43 | 43 |
| Content $C_{a2-1}$ of diol compound (a2-1) based on total amount of polyol component (a) [mol%] | 57 | 57 | 57 | 71 | 57 | 86 | 93 | 29 | 57 | 57 |
| $C_{a1}/C_{a2-1}$ | 43/57 | 43/57 | 43/57 | 29/71 | 43/57 | 14/86 | 7/93 | 71/29 | 43/57 | 43/57 |
| Hydroxyl value [mgKOH/g] | 44 | 80 | 45 | 40 | 39 | 31 | 32 | 30 | 42 | 25 |
| Acid value [mgKOH/g] | 0 | 0 | 0 | 0 | 0 | 0 | 0 | 0 | 0 | 0 |
| Weight-average molecular weight [$\times 10^3$] | 20 | 13 | 20 | 24 | 23 | 30 | 32 | 30 | 25 | 40 |
| Number-average molecular weight [$\times 10^3$] | 5 | 7 | 6 | 7 | 7 | 7 | 8 | 8 | 6 | 8 |

Table 2

| | | | | | Production Example | | | | | | | | | |
|---|---|---|---|---|---|---|---|---|---|---|---|---|---|---|
| | | | | | Reference example 12 | 13 | 14 | 15 | 16 | Reference example 17 | 18 | 19 | 20 | 21 |
| Hydroxyl group-containing urethane resin solution | | | | | A-11 | A-12 | A-13 | A-14 | A-15 | A-16 | A-17 | A-18 | A-19 | A-20 |
| Methyl isobutyl ketone | | | | | 243 | 167 | 243 | 397 | 550 | 167 | 243 | 388 | 375 | 377 |
| Polyol Component (a) | Cyclic polyol compound (a1) having nurate structure | | | Tris(2-hydroxyethyl) isocyanurate (molecular weight 261) | 20 | 20 | 20 | 20 | 20 | 20 | 20 | 20 | 20 | 20 |
| | Other polyol compound (a2) | Diol compound (a2-1) | Polycarbonate diol compound (a2-1-2) | "UH-CARB50" (Note 4) | | 51 | | | | | | | | |
| | | | | "UH-CARB100" (Note 5) | | | 102 | | | | 13 | | | |
| | | | | "UH-CARB200" (Note 6) | | | | 204 | | | | 204 | 204 | 204 |
| | | | | "UH-CARB300" (Note 7) | | | | | 307 | | | | | |
| | | "Kraray Polyol P-510" (Note 8) | | | | | | | | 51 | | | | |
| | | "Kraray Polyol P-1011" (Note 9) | | | | | | | | | 89 | | | |
| | | "PEG-1000" (Note 10) | | | 102 | | | | | | | | | |
| N-methyl-2-pyrrolidone | | | | | 24 | 17 | 24 | 40 | 55 | 17 | 24 | 39 | 38 | 38 |
| Dibutyltin dilaurate | | | | | 0.016 | 0.011 | 0.016 | 0.026 | 0.037 | 0.011 | 0.016 | 0.026 | 0.025 | 0.025 |
| Polyisocyanate compound (b) | Alicyclic diisocyanate | Methylene-bis(1,4-cyclohexanediyl) diisocyanate (molecular weight 262) | | | 40 | 40 | 40 | 40 | 40 | 40 | 40 | | | |
| | | Isophorone diisocyanate (molecular weight 222) | | | | | | | | | | 34 | | |
| | Aliphatic diisocyanate | Hexamethylenediamine diisocyanate (molecular weight 168) | | | | | | | | | | | 26 | |
| | Aromatic diisocyanate | 2,4-toluene diisocyanate (molecular weight 174) | | | | | | | | | | | | 27 |
| Methyl isobutyl ketone | | | | | 111 | 76 | 111 | 181 | 251 | 76 | 111 | 177 | 171 | 171 |

(continued)

| | Production Example | | | | | | | | | |
|---|---|---|---|---|---|---|---|---|---|---|
| | Reference example 12 | 13 | 14 | 15 | 16 | Reference example 17 | 18 | 19 | 20 | 21 |
| Content $C_{a1}$ of cyclic polyol compound (a1) having nurate structure based on total amount of polyol component (a) [mol%] | 43 | 43 | 43 | 43 | 43 | 43 | 43 | 43 | 43 | 43 |
| Content $C_{a2-1}$ of diol compound (a2-1) based on total amount of polyol component (a) [mol%] | 0 | 57 | 57 | 57 | 57 | 0 | 7 | 57 | 57 | 57 |
| $C_{a1}/C_{a2-1}$ | 100/0 | 43/57 | 43/57 | 43/57 | 43/57 | 100/0 | 86/14 | 43/57 | 43/57 | 43/57 |
| Hydroxyl value [mgKOH/g] | 44 | 88 | 44 | 25 | 10 | 88 | 44 | 22 | 23 | 22 |
| Acid value [mgKOH/g] | 0 | 0 | 0 | 0 | 0 | 0 | 0 | 0 | 0 | 0 |
| Weight-average molecular weight [$\times 10^3$] | 20 | 10 | 20 | 40 | 60 | 10 | 20 | 38 | 39 | 38 |
| Number-average molecular weight [$\times 10^3$] | 5 | 6 | 5 | 8 | 16 | 6 | 5 | 7 | 7 | 6 |

Table 3

| | | | | | Production Example 22 | 23 | 24 | 25 | 26 | 27 | 28 | 29 |
|---|---|---|---|---|---|---|---|---|---|---|---|---|
| Hydroxyl group-containing urethane resin solution | | | | | A-21 | A-22 | A-23 | A-24 | A-25 | A-26 | A-27 | A-28 |
| Methyl isobutyl ketone | | | | | 804 | 97 | 497 | 58 | 269 | 229 | 194 | 230 |
| Polyol Component (a) | Cyclic polyol compound (a1) having nurate structure | | | Tris(2-hydroxyethyl) isocyanurate (molecular weight 261) | 40 | 7 | 40 | 7 | 13 | | | |
| | Other polyol compound (a2) | Diol compound (a2-1) | Polyether diol compound (a2-1-1) | "PTMG-1000" (Note 2). | | | 204 | 26 | 102 | 102 | | 102 |
| | | | Polycarbonate diol compound (a2-1-2) | "UH-CARB50" (Note 4) | | | | | | | | |
| | | | | "UH-CARB200" (Note 6) | 409 | 51 | | | | | | |
| | | "Kraray Polyol P-510" (Note 8) | | | | | | | | | 89 | |
| | | Trimethylolpropane (molecular weight 134) | | | | | | | | 10 | | |
| | | 1,4-Cyclohexanedimethanol (molecular weight 144) | | | | | | | | | | 11 |
| | | Dimethylolpropionic acid (molecular weight 134) | | | | | | | 10 | | | |
| N-methyl-2-pyrrolidone | | | | | 80 | 10 | 50 | 6 | 27 | 23 | 19 | 23 |
| Dibutyltin dilaurate | | | | | 0.054 | 0.006 | 0.033 | 0.004 | 0.018 | 0.015 | 0.013 | 0.015 |
| Poly-isocyanate compound (b) | Alicyclic diisocyanate | Methylene-bis(1,4-cyclohexanediyl) diisocyanate (molecular weight 262) | | | 87 | 7 | 87 | 7 | 54 | 40 | 40 | 40 |
| Methyl isobutyl ketone | | | | | 366 | 44 | 226 | 27 | 123 | 104 | 89 | 105 |
| Content $C_{a1}$ of cyclic polyol compound (a1) having nurate structure based on total amount of polyol component (a) [mol%] | | | | | 43 | 50 | 43 | 50 | 22 | 0 | 0 | 0 |
| Content $C_{a2-1}$ of diol compound (a2-1) based on total amount of polyol component (a) [mol%] | | | | | 57 | 50 | 57 | 50 | 44 | 57 | 0 | 57 |
| $C_{a1}/C_{a2-1}$ | | | | | 43/57 | 50/50 | 43/57 | 50/50 | 33/67 | 0/100 | 0 | 0/100 |
| Hydroxyl value [mgKOH/g] | | | | | 15 | 55 | 20 | 65 | 40 | 47 | 70 | 20 |
| Acid value [mgKOH/g] | | | | | 0 | 0 | 0 | 0 | 24 | 0 | 0 | 0 |

(continued)

| | Production Example | | | | | | | |
|---|---|---|---|---|---|---|---|---|
| | 22 | 23 | 24 | 25 | 26 | 27 | 28 | 29 |
| Weight-average (molecular weight [$\times 10^3$] | 55 | 12 | 48 | 9 | 22 | 18 | 15 | 12 |
| Number-average molecular weight [$\times 10^3$] | 14 | 3 | 12 | 2.5 | 6 | 5 | 4 | 4 |

(Note 1) "PTMG-650": a trade name, manufactured by Mitsubishi Chemical Corporation, polytetramethylene ether glycol, number-average molecular weight of 650, hydroxyl value of 172 mgKOH/g
(Note 2) "PTMG-1000": a trade name, manufactured by Mitsubishi Chemical Corporation, polytetramethylene ether glycol, number-average molecular weight of 1,000, hydroxyl value of 112 mgKOH/g
(Note 3) "PTMG-2000": a trade name, manufactured by Mitsubishi Chemical Corporation, polytetramethylene ether glycol, number-average molecular weight of 2,000, hydroxyl value of 56 mgKOH/g
(Note 4) "UH-CARB50": a trade name, manufactured by Ube Industries, Ltd., polycarbonate diol, number-average molecular weight of 500, hydroxyl value of 224 mgKOH/g
(Note 5) "UH-CARB100": a trade name, manufactured by Ube Industries, Ltd., polycarbonate diol, number-average molecular weight of 1,000, hydroxyl value of 112 mgKOH/g
(Note 6) "UH-CARB200": a trade name, manufactured by Ube Industries, Ltd., polycarbonate diol, number-average molecular weight of 2,000, hydroxyl value of 56 mgKOH/g
(Note 7) "UH-CARB300": a trade name, manufactured by Ube Industries, Ltd., polycarbonate diol, number-average molecular weight of 3,000, hydroxyl value of 37 mgKOH/g
(Note 8) "Kraray Polyol P-510": a trade name, manufactured by Ube Industries, Ltd., polyester diol, number-average molecular weight of 500, hydroxyl value of 224 mgKOH/g
(Note 9) "Kraray Polyol P-1011": a trade name, manufactured by Ube Industries, Ltd., polyester diol, number-average molecular weight of 1,000, hydroxyl value of 112 mgKOH/g
(Note 10) "PEG-1000": a trade name, manufactured by Sanyo Chemical Industries, Ltd., polyethylene glycol, number-average molecular weight of 1,000, hydroxyl value of 112 mgKOH/g

In Tables 1 to 3, among the hydroxyl group-containing urethane resin solutions (A-1) to (A-28), the hydroxyl group-containing urethane resin solutions (A-1) to (A-25) correspond to hydroxyl group-containing urethane resins (A) each obtained by reacting a polyol component (a) composed of a cyclic polyol compound (a1) having a nurate structure and another polyol compound (a2) with a polyisocyanate compound (b).

[Production of coating composition]

(Example 1)

After 83 parts (resin solid content: 25 parts) of the hydroxyl group-containing urethane resin solution (A-1) obtained in Production Example 1, 50 parts of "JR-806" (a trade name, manufactured by Tayca Corporation, titanium dioxide pigment), 1 part of "Carbon MA-100" (a trade name, manufactured by Mitsubishi Chemical Corporation, carbon black pigment), 5 parts of "MICRO ACE S-3" (a trade name, manufactured by Nippon Talc Co., Ltd., talc), and 15 parts of methyl isobutyl ketone were mixed, the mixture was dispersed in a paint shaker for 30 minutes to obtain a pigment-dispersed paste.

Then, 154 parts of the resulting pigment-dispersed paste, 150 parts (resin solid content: 45 parts) of the hydroxyl group-containing urethane resin solution (A-1) obtained in Production Example 2, 43 parts (resin solid content: 30 parts) of "Desmodur BL3370MPA" (a trade name, manufactured by Sumika Bayer Urethane, an active methylene-blocked polyisocyanate compound, solid content of 70%), and 10 parts of "DENACOL EX-252" (a trade name, manufactured by Nagase ChemteX Corporation, a hydrogenated bisphenol A type epoxy resin, epoxy equivalent of 213) were homogeneously mixed.

Then, methyl isobutyl ketone was added to the resulting mixture to obtain a coating composition (X-1) having a viscosity of 15 seconds in terms of Ford cup No. 4 at 20°C.

(Examples 2 to 30 and Comparative Examples 1 to 3)

Coating compositions (X-2) to (X-33) were obtained in the same manner as in Example 1 except that, in Example 1, each blend composition was changed as shown in the following tables 4 to 6.

Table 4

| | | | | 1 | 2 | 3 | 4 | 5 | 6 | 7 | 8 | 9 | 10 | Reference example 11 |
|---|---|---|---|---|---|---|---|---|---|---|---|---|---|---|
| | | | | Example | | | | | | | | | | |
| Name of coating composition | | | | X-1 | X-2 | X-3 | X-4 | X-5 | X-6 | X-7 | X-8 | X-9 | X-10 | X-11 |
| Pigment-dispersed paste | Hydroxyl group-containing urethane resin (A) | | Kind | A-1 | A-2 | A-3 | A-4 | A-5 | A-6 | A-7 | A-8 | A-9 | A-10 | A-11 |
| | | | Blended amount | 83 | 83 | 83 | 83 | 83 | 83 | 83 | 83 | 83 | 83 | 83 |
| | Pigment | Coloring | "JR-806" | 50 | 50 | 50 | 50 | 50 | 50 | 50 | 50 | 50 | 50 | 50 |
| | | pigment | "MA-100" | 1 | 1 | 1 | 1 | 1 | 1 | 1 | 1 | 1 | 1 | 1 |
| | | Extender pigment | "MICRO ACE S-3" | 5 | 5 | 5 | 5 | 5 | 5 | 5 | 5 | 5 | 5 | 5 |
| | Methyl isobutyl ketone | | | 15 | 15 | 15 | 15 | 15 | 15 | 15 | 15 | 15 | 15 | 15 |
| Hydroxyl group-containing urethane resin (A) | | | Kind | A-1 | A-2 | A-3 | A-4 | A-5 | A-6 | A-7 | A-8 | A-9 | A-10 | A-11 |
| | | | Blended amount | 150 | 150 | 150 | 150 | 150 | 150 | 150 | 150 | 150 | 150 | 150 |
| Curing agent (B) | Blocked polyisocyanate compound | | "Desmodur BL3370MPA" | 43 | 43 | 43 | 43 | 43 | 43 | 43 | 43 | 43 | 43 | 43 |
| Epoxy resin | | | "DENACOL EX-252" | 10 | 10 | 10 | 10 | 10 | 10 | 10 | 10 | 10 | 10 | 10 |

Table 5

| | | | | Example | | | | | | | | | | |
|---|---|---|---|---|---|---|---|---|---|---|---|---|---|---|
| | | | | 12 | 13 | 14 | 15 | Reference example 16 | 17 | 18 | 19 | 20 | 21 | 22 |
| Name of coating composition | | | | X-12 | X-13 | X-14 | X-15 | X-16 | X-17 | X-18 | X-19 | X-20 | X-21 | X-22 |
| Pigment-dispersed paste | Hydroxyl group-containing urethane resin (A) | | Kind | A-12 | A-13 | A-14 | A-15 | A-16 | A-17 | A-18 | A-19 | A-20 | A-21 | A-22 |
| | | | Blended amount | 83 | 83 | 83 | 83 | 83 | 83 | 83 | 83 | 83 | 83 | 83 |
| | Pigment | Coloring pigment | "JR-806" | 50 | 50 | 50 | 50 | 50 | 50 | 50 | 50 | 50 | 50 | 50 |
| | | | "MA-100" | 1 | 1 | 1 | 1 | 1 | 1 | 1 | 1 | 1 | 1 | 1 |
| | | Extender pigment | "MICRO ACE S-3" | 5 | 5 | 5 | 5 | 5 | 5 | 5 | 5 | 5 | 5 | 5 |
| | Methyl isobutyl ketone | | | 15 | 15 | 15 | 15 | 15 | 15 | 15 | 15 | 15 | 15 | 15 |
| Hydroxyl group-containing urethane resin (A) | | | Kind | A-12 | A-13 | A-14 | A-15 | A-16 | A-17 | A-18 | A-19 | A-20 | A-21 | A-22 |
| | | | Blended amount | 150 | 150 | 150 | 150 | 150 | 150 | 150 | 150 | 150 | 150 | 150 |
| Curing agent (B) | Blocked polyisocyanate compound | | "Desmodur BL3370MPA" | 43 | 43 | 43 | 43 | 43 | 43 | 43 | 43 | 43 | 43 | 43 |
| Epoxy resin | | | "DENACOL EX-252" | 10 | 10 | 10 | 10 | 10 | 10 | 10 | 10 | 10 | 10 | 10 |

Table 6

| | | | | Example | | | | | | | | Comparative Example | | |
|---|---|---|---|---|---|---|---|---|---|---|---|---|---|---|
| | | | | 23 | 24 | 25 | 26 | Reference example 27 | 28 | 29 | 30 | 1 | 2 | 3 |
| Name of coating composition | | | | X-23 | X-24 | X-25 | X-26 | X-27 | X-28 | X-29 | X-30 | X-31 | X-32 | X-33 |
| Pigment-dispersed paste | Hydroxyl group-containing urethane resin (A) | | Kind | A-23 | A-24 | A-25 | A-18 | A-18 | A-13 | A-13 | A-15 | A-26 | A-27 | A-28 |
| | | | Blended amount | 83 | 83 | 83 | 83 | 83 | 83 | 83 | 83 | 83 | 83 | 83 |
| | Pigment | Coloring pigment | "JR-806" | 50 | 50 | 50 | 50 | 50 | 50 | 50 | 50 | 50 | 50 | 50 |
| | | | "MA-100" | 1 | 1 | 1 | 1 | 1 | 1 | 1 | 1 | 1 | 1 | 1 |
| | | Extender pigment | "MICRO ACE S-3" | 5 | 5 | 5 | 5 | 5 | 5 | 5 | 5 | 5 | 5 | 5 |
| | Methyl isobutyl ketone | | | 15 | 15 | 15 | 15 | 15 | 15 | 15 | 15 | 15 | 15 | 15 |
| Hydroxyl group-containing urethane resin (A) | | | Kind | A-23 | A-24 | A-25 | A-18 | A-18 | A-13 | A-13 | A-15 | A-26 | A-27 | A-28 |
| | | | Blended amount | 150 | 150 | 150 | 150 | 135 | 150 | 150 | 150 | 150 | 150 | 150 |
| Curing agent (B) | Blocked polyisocyanate compound | | "Desmodur BL3370MPA" | 43 | 43 | 43 | 43 | 50 | | | | 43 | 43 | 43 |
| | | | "Desmodur BL3175" (Note 11) | | | | | | 40 | | | | | |
| | Polyisocyanate compound | | "Sumidur N3300 (Note 12) | | | | | | | 30 | | | | |
| | Amino resin | | "Cymel 325" (Note 13) | | | | | | | | 50 | | | |
| Epoxy resin | | | "DENACOL EX-252" | 10 | 10 | 10 | | | 10 | 10 | 10 | 10 | 10 | 10 |
| | | | "DENACOL EX-931" (Note 14) | | | | 10 | | | | | | | |

(Note 11) "Desmodur BL3175" (a trade name, manufactured by Sumika Bayer Urethane, a methyl ethyl ketoxime-blocked polyisocyanate compound, solid content of 75%)
(Note 12) "Sumidur N3300" (a trade name, manufactured by Sumika Bayer Urethane, a polyisocyanate compound having an isocyanurate structure, solid content of 100%)
(Note 12) "Cymel 325" (a trade name, manufactured by Japan Cytec Industries, Inc., a melamine resin, solid content of 80%)
(Note 13) "DENACOL EX-931" (a trade name, manufactured by Nagase ChemteX Corporation, polypropylene glycol diglycidyl ether, epoxy equivalent of 471)

[Manufacture of article for test]

A thermosetting epoxy resin-based cationic electrodeposition coating composition (a trade name "Elecron GT-10", manufactured by Kansai Paint Co., Ltd.) was applied by electrodeposition on a cold-rolled steel having a size of 30 cmx45 cm and subjected to a zinc phosphate treatment so that the film thickness became 20 μm and then was cured at 170°C for 30 minutes to manufacture an article for test.

[Method for forming coated film]

Example 31

The coating composition (X-1) was applied on the article for test using an air spray-type coating machine so that the film thickness became 6 μm and the coated article was allowed to stand for 2 minutes. Then, an intermediate coating composition (a trade name "TP-65-2", manufactured by Kansai Paint Co., Ltd., a polyester resin/amino resin-based organic solvent-type coating composition) was applied on the uncured coated surface so that the film thickness became 35 μm and the resulting article was heated at 140°C for 30 minutes to cure both the coated films simultaneously. Thereafter, a topcoating colored basecoating composition (a trade name "WBC-713T", manufactured by Kansai Paint Co., Ltd., an acrylic resin/amino resin-based aqueous coating composition) was applied thereon using a rotation atomization-type bell-type coating machine so that the film thickness became 15 μm and the coated article was allowed to stand for 2 minutes, followed by performing pre-heating at 80°C for 3 minutes. Then, a topcoating clear coating composition (a trade name "Magiclon KINO-1210", manufactured by Kansai Paint Co., Ltd., an acrylic resin-based organic solvent-type coating composition) was applied on the uncured coated film so that the film thickness became 40 μm and the coated article was allowed to stand for 7 minutes, followed by heating at 140°C for 30 minutes to cure both the coated films simultaneously. Thus, there was obtained a test plate on which a multilayered coated film composed of the coated film derived from the coating composition (X-1), the intermediate coated film, the basecoated film, and the clear coated film was formed on the article to be coated for test.

Examples 32 to 60 and Comparative Examples 4 to 6

Test plates of Examples 32 to 60 and Comparative Examples 4 to 6 were obtained in the same manner as in Example 31 except that the coating compositions as shown in Table 7 were used instead of the coating composition (X-1) in Example 31.

[Evaluation test]

On each of the test plates obtained in Examples 32 to 60 and Comparative Examples 4 to 6, performance of the coated film, i.e., chipping resistance, smoothness, and water resistance were investigated. The test method was as follows.

Chipping resistance: a test plate was placed on a test piece-holding table of a gravel chipping test instrument "JA-400 Model" (a trade name, Suga Test Instruments Co., Ltd., a chipping resistance testing apparatus) and 50 g of granite broken stones having a grain size of No. 7 were allowed to collide against the test plate at an angle of 45 degree from a distance of 30 cm with compressed air of 0.392 MPa (4 kgf/cm$^2$) at a temperature of 25°C. Thereafter, the resulting test plate was washed with water and dried and a cloth adhesive tape (manufactured by Nichiban Co., Ltd.) was adhered to the coated surface. After the tape was peeled off, a degree of generation of scratches and the like on the coated film were visually observed and evaluated according to the following standard.

A: the size of the scratches is extremely small and the electrodeposited surface and the basis steel sheet are not exposed.
B: the size of the scratches is small and the electrodeposited surface and the basis steel sheet are not exposed.
C: the size of the scratches is small but the electrodeposited surface and the basis steel sheet are exposed.
D: the size of the scratches is considerably large and the electrodeposited surface and the basis steel sheet are considerably exposed.

Water resistance: a test plate was immersed in warm water at 40°C for 240 hours and then pulled up. After dried at 20°C for 12 hours, the multilayered coated film on the test plate was snicked in a grid form with a cutter so as to reach the basis, manufacturing 100 pieces of square snicks having a size of 2 mmx2 mm. Subsequently, an adhesive cellophane tape was adhered on the surface, and the remaining state of the square snicks of the coated film was investigated after the tape was rapidly peeled off at 20°C. The evaluation standard of water resistance is as follows.

A: 100 pieces of the square snicks of the coated film remain and edge chipping does not occur.
B: 100 pieces of the square snicks of the coated film remain but edge chipping occurs.
C: 90 to 99 pieces of the square snicks of the coated film remain.
D: the remaining number of the square snicks of the coated film is 89 pieces or less.

Smoothness: on each test plate, smoothness was evaluated based on a Wd value measured by "Wave Scan DOI" (a trade name, manufactured by BYK Gardner). A smaller Wd value shows higher smoothness of the coated surface.
Distinctness of image: on each test plate, distinctness of image was evaluated based on a Wb value measured by "Wave Scan DOI" (a trade name, manufactured by BYK Gardner). A smaller Wb value shows higher distinctness of image of the coated surface.
Table 7 shows test results of the performance of the coated films.

Table 7

| | | Name of coating composition | Evaluation results | | | |
|---|---|---|---|---|---|---|
| | | | Chipping resistance | Water resistance | Smoothness | Distinctness of image |
| Example | 31 | X-1 | B | B | 15 | 17 |
| | 32 | X-2 | B | A | 14 | 15 |
| | 33 | X-3 | B | A | 13 | 14 |
| | 34 | X-4 | B | A | 13 | 13 |
| | 35 | X-5 | B | A | 13 | 14 |
| | 36 | X-6 | B | A | 13 | 14 |
| | 37 | X-7 | B | A | 13 | 16 |
| | 38 | X-8 | B | A | 16 | 14 |
| | 39 | X-9 | B | A | 14 | 15 |
| | 40 | X-10 | B | A | 14 | 14 |
| | Reference example 41 | X-11 | B | B | 15 | 18 |
| | 42 | X-12 | B | A | 14 | 15 |
| | 43 | X-13 | B | A | | 14 |
| | 44 | X-14 | A | A | 13 | 13 |
| | 45 | X-15 | A | A | 15 | 13 |
| | Reference example 46 | X-16 | B | B | 15 | 17 |
| | 47 | X-17 | B | B | 15 | 17 |
| | 48 | X-18 | A | A | 15 | 14 |
| | 49 | X-19 | A | B | 14 | 14 |
| | 50 | X-20 | B | A | 14 | 14 |
| | 51 | X-21 | B | A | 15 | 15 |
| | 52 | X-22 | A | B | 14 | 14 |
| | 53 | X-23 | B | A | 17 | 14 |
| | 54 | X-24 | B | B | 14 | 17 |
| | 55 | X-25 | B | B | 13 | 15 |
| | 56 | X-26 | A | B | 16 | 14 |

(continued)

| | | Name of coating composition | Evaluation results | | | |
|---|---|---|---|---|---|---|
| | | | Chipping resistance | Water resistance | Smoothness | Distinctness of image |
| | Reference example 57 | | B | B | 15 | 14 |
| | 58 | X-28 | B | A | 15 | 15 |
| | 59 | X-29 | B | A | 15 | 14 |
| | 60 | X-30 | B | B | 16 | 15 |
| Comparative Example | 4 | X-31 | B | C | 14 | 16 |
| | 5 | X-32 | A | D | 20 | 20 |
| | 6 | X-33 | D | C | 15 | 16 |

As shown by Examples 31 to 60 in Table 7, the coated films formed by the coating compositions of X-1 to X-30 each containing a hydroxyl group-containing urethane resin (A) obtained by reacting a polyol component (a) containing a cyclic polyol compound (a1) having a nurate structure with a polyisocyanate compound (b) and a curing agent (B) were excellent in chipping resistance and water resistance as well as excellent in smoothness and distinctness of image.

On the other hand, as shown by Comparative Example 4, the coated film formed by the coating composition of X-31 containing a hydroxyl group-containing urethane resin (A) obtained by reacting a polyol component (a) containing no cyclic polyol compound (a1) having a nurate structure with a polyisocyanate compound (b) and a curing agent (B) was poor in water resistance. Moreover, as shown by Comparative Example 6, the coated film formed by the coating composition of X-33 was poor in chipping resistance and water resistance.

Furthermore, as shown by Comparative Example 5, the coated film formed by the coating composition of X-32 containing a hydroxyl group-containing urethane resin (A) obtained by reacting a polyol component (a) containing no cyclic polyol compound (a1) having a nurate structure and no diol compound (a2-1) with a polyisocyanate compound (b) and a curing agent (B) was poor in water resistance, smoothness, and distinctness of image.

From these results, it was found that coated films excellent in chipping resistance and water resistance as well as excellent in smoothness and distinctness of image can be formed by the coating composition that contains a hydroxyl group-containing urethane resin (A) obtained by reacting a polyol component (a) containing a cyclic polyol compound (a1) having a nurate structure with a polyisocyanate compound (b).

While the present invention has been described in detail and with reference to specific embodiments thereof, it will be apparent to one skilled in the art that various changes and modifications can be made therein without departing from the scope thereof.

The present application is based on Japanese Patent Application No. 2009-273985 filed on December 1, 2009, the entire contents thereof being hereby incorporated by reference.

Industrial Applicability

The chipping-resistant coating composition of the present invention can form a coated film excellent in chipping resistance and water resistance because the composition contains a hydroxyl group-containing urethane resin obtained by reacting a polyol component containing a cyclic polyol compound having a nurate structure with a polyisocyanate compound and a curing agent.

## Claims

**1.** A chipping-resistant coating composition comprising:

- a hydroxyl group-containing urethane resin (A) obtained by reacting a polyol component (a) composed of a cyclic polyol compound (a1) having a nurate structure and another polyol compound (a2) with a polyisocyanate compound (b),
wherein said polyol compound (a2) contains at least one diol compound (a2-1) selected from the group consisting of

a polyether diol compound (a2-1-1) represented by the following general formula (1)

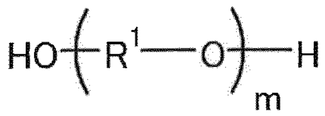 (1)

wherein $R^1$'s each represent an alkylene group having 3 or more carbon atoms, m represents an integer of 2 to 100, and $R^1$'s in m pieces of the repeating unit are the same or different from each other, and
a polycarbonate diol compound (a2-1-2) represented by the following general formula (2):

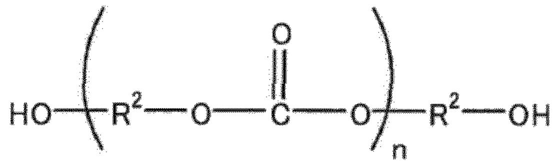 (2)

wherein a plurality of $R^2$'s each independently represent an alkylene group having 3 or more carbon atoms and n represents an integer of 2 to 100,

- a curing agent (B), wherein the curing agent (B) is a polyisocyanate and/or a blocked polyisocyanate compound, and
- an epoxy resin.

**2.** The chipping-resistant coating composition according to claim 1, wherein the cyclic polyol compound (a1) having a nurate structure is tris(hydroxyalkyl) isocyanurate.

**3.** The chipping-resistant coating composition according to claim lor 2, wherein the content $C_{a1}$ of the cyclic polyol compound (a1) having a nurate structure based on the total amount of the polyol component (a) is within a range of 1 to 75 mol%, the content $C_{a2-1}$ of the diol compound (a2-1) based on the total amount of the polyol component (a) is within a range of 10 to 99 mol%, and the ratio $C_{a1}/C_{a2-1}$ of $C_{a1}$ to $C_{a2-1}$ is within a range of 1/99 to 75/25.

**4.** The chipping-resistant coating composition according to any one of claims 1 to 3, wherein the polyisocyanate compound (B) is an alicyclic diisocyanate.

**5.** The chipping-resistant coating composition according to any one of claims 1 to 4, wherein the hydroxyl group-containing urethane resin (A) has a hydroxyl value within a range of 1 to 100 mg KOH/g.

**6.** An article comprising a coated film of the chipping-resistant coating composition according to any one of claims 1 to 5.

## Patentansprüche

**1.** Absplitterungsresistente Beschichtungszusammensetzung, umfassend:

- ein Urethanharz (A), das eine Hydroxylgruppe enthält, und durch die Reaktion einer Polyol-Verbindung (a), zusammengesetzt aus einer zyklischen Polyol-Verbindung (a1), die eine Nurat-Struktur aufweist, und einer weiteren Polyol-Verbindung (a2), mit einer Polyisocyanat-Verbindung (B) erhalten wird,
wobei die Polyol-Verbindung (a2) mindestens eine Diol-Verbindung (a2-1) enthält, ausgewählt aus der Gruppe bestehend aus

einer Polyetherdiol-Verbindung (a2-1-1), dargestellt durch die folgende allgemeine Formel (1)

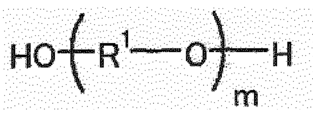 (1)

wobei jeder der $R^1$-Reste eine Alkylen-Gruppe darstellt, die 3 oder mehr Kohlenstoffatome aufweist, m eine ganze Zahl zwischen 2 und 100 darstellt, und die $R^1$-Reste in m Stücken der sich wiederholenden Einheit gleich sind oder sich voneinander unterscheiden, und
einer Polycarbonatdiol-Verbindung (a2-1-2), dargestellt durch die folgende allgemeine Formel (2)

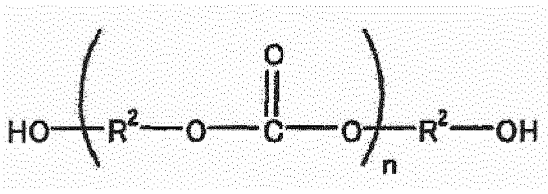
(2)

wobei eine Vielzahl der $R^2$-Reste unabhängig voneinander jeweils eine Alkylen-Gruppe darstellt, die 3 oder mehr Kohlenstoffatome aufweist, und n eine ganze Zahl zwischen 2 und 100 darstellt,

- ein Härtungsmittel (B), wobei das Härtungsmittel (B) eine Polyisocyanat- und/oder eine geblockte Polyisocyanat-Verbindung ist, und
- ein Epoxidharz.

2. Absplitterungsresistente Beschichtungszusammensetzung nach Anspruch 1, wobei die zyklische Polyol-Verbindung (a1), die eine Nurat-Struktur aufweist, Tris(hydroxyalkyl)isocyanurat ist.

3. Absplitterungsresistente Beschichtungszusammensetzung nach Anspruch 1 oder 2, wobei
der Gehalt $C_{a1}$ der zyklischen Polyol-Verbindung (a1), die eine Nurat-Struktur aufweist, basierend auf der Gesamtmenge der Polyol-Verbindung (a), in einem Bereich von 1 bis 75 Mol% liegt, der Gehalt $C_{a2-1}$ der Diol-Verbindung (a2-1), basierend auf der Gesamtmenge der Polyol-Verbindung (a), in einem Bereich von 10 bis 99 Mol% liegt, und das Verhältnis $C_{a1}/C_{a2-1}$ von $C_{a1}$ zu $C_{a2-1}$ in einem Bereich von 1/99 bis 75/25 liegt.

4. Absplitterungsresistente Beschichtungszusammensetzung nach einem der Ansprüche 1 bis 3, wobei die Polyisocyanat-Verbindung (B) ein alizyklisches Diisocyanat ist.

5. Absplitterungsresistente Beschichtungszusammensetzung nach einem der Ansprüche 1 bis 4, wobei das Urethanharz (A), das eine Hydroxylgruppe enthält, einen Hydroxylwert im Bereich von 1 bis 100 mg KOH/g aufweist.

6. Artikel, der eine beschichtete Folie der absplitterungsresistenten Beschichtungszusammensetzung nach einem der Ansprüche 1 bis 5 enthält.

## Revendications

1. Composition de revêtement résistante aux éclats comprenant :

- une résine d'uréthane contenant un groupe hydroxyle (A) obtenue par réaction d'un constituant de polyol (a) constitué d'un composé de polyol cyclique (a1) présentant une structure de nurate et d'un autre composé de polyol (a2) avec un composé de polyisocyanate (b),
dans laquelle ledit composé de polyol (a2) contient au moins un composé de diol (a2-1) choisi dans le groupe constitué de
un composé de polyéther diol (a2-1-1) représenté par la formule générale (1) suivante

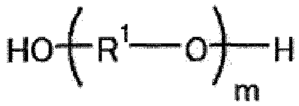
(1)

dans laquelle les $R^1$ représentent chacun un groupe alkylène ayant 3 atomes de carbone ou plus, m représente un nombre entier de 2 à 100, et les $R^1$ dans les m pièces de l'unité répétitive sont identiques ou différentes les unes des autres, et

un composé de polycarbonate diol (a2-1-2) représenté par la formule générale (2) suivante :

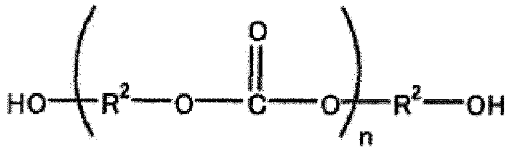

(2)

dans laquelle les plusieurs $R^2$ représentent chacun indépendamment un groupe alkylène ayant 3 atomes de carbone ou plus et n représente un nombre entier de 2 à 100,
- un agent durcissant (B), dans lequel l'agent durcissant (B) est un polyisocyanate et/ou un composé de polyisocyanate bloqué, et
- une résine époxy.

**2.** Composition de revêtement résistante aux éclats selon la revendication 1, dans laquelle le composé de polyol cyclique (a1) présentant une structure de nurate est un tris(hydroxyalkyle)isocyanurate.

**3.** Composition de revêtement résistante aux éclats selon la revendication 1 ou 2, dans laquelle la teneur $C_{a1}$ du composé de polyol cyclique (a1) présentant une structure de nurate sur la base de la quantité totale du constituant de polyol (a) se trouve dans un intervalle de 1 à 75 % en mole, la teneur $C_{a2-1}$ du composé de diol (a2-1) sur la base de la quantité totale du constituant de polyol (a) se trouve dans un intervalle de 10 à 99 % en mole, et le rapport $C_{a1}/C_{a2-1}$ de $C_{a1}$ à $C_{a2-1}$ se trouve dans un intervalle de 1/99 à 75/25.

**4.** Composition de revêtement résistante aux éclats selon l'une quelconque des revendications 1 à 3, dans laquelle le composé de polyisocyanate (B) est un diisocyanate alicyclique.

**5.** Composition de revêtement résistante aux éclats selon l'une quelconque des revendications 1 à 4, dans laquelle la résine d'uréthane contenant un groupe hydroxyle (A) présente un indice hydroxyle dans un intervalle de 1 à 100 mg de KOH/g.

**6.** Article comprenant un film revêtu de la composition de revêtement résistante aux éclats selon l'une quelconque des revendications 1 à 5.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2007010385 A
- JP 2009273985 A